# EUROPEAN PATENT APPLICATION

(11) **EP 2 690 686 A1**
(43) Date of publication of application: **29.01.2014**
(21) Application number: 13174527.5
(22) Date of filing: 01.07.2013
(51) Int. Cl.: H01M 4/04, H01M 4/139, H01M 10/04, H01M 10/052, H01M 10/0565, H01M 10/058

(54) **Lithium-ion secondary battery, method of and apparatus for producing the same**

(30) Priority: 26.07.2012 JP 2012165442
(71) Applicant: Kojima Industries Corporation, Toyota-shi, Aichi 471-0875 (JP)
(72) Inventor: NOGUCHI, Masumi, Toyota-shi, Aichi 471-0875 (JP)
(74) Representative: Naylor, Matthew John

(57) **Abstract**

A lithium-ion secondary battery 10 consisting of a laminar member 40 including a positive electrode collector layer 12, a positive electrode layer 16 consisting of a vapor-deposited polymer film 26 containing a positive electrode active substance 24, and positive-electrode-side vapor-deposited polymer films 36, 37, which are integrally laminated on each other, and a laminar member 42 including a negative electrode collector layer 14, a negative electrode layer 18 consisting of a vapor-deposited polymer film 30 containing a negative electrode active substance 28, and negative-electrode-side vapor-deposited polymer films 38, 39, which are integrally laminated on each other. The laminar members 40, 42 are superposed on each other such that the vapor-deposited polymer films 36, 37 are in contact with the vapor-deposited polymer films 38, 39. The vapor-deposited polymer films 36, 37, 38, 39 constitute a solid electrolyte layer 20.

## Description

### BACKGROUND OF THE INVENTION

### Field of the Invention

The present invention relates in general to a lithium-ion secondary battery, and a method of and an apparatus for producing the same, and more particularly to improvements of an all solid type lithium-ion secondary battery having a battery cell or cell element including a positive electrode layer and a negative electrode layer which are superposed on respective opposite surfaces of a solid electrolyte layer, such that the positive and negative electrode layers and the solid electrolyte layer are interposed between a positive electrode collector layer and a negative electrode collector layer, and a method and an apparatus which permit advantageous production of the thus constructed lithium-ion secondary battery.

### Discussion of Related Art

A lithium-ion secondary battery having a high energy density is widely used as an electric power source in portable electronic devices such as notebook personal computers and cellular or mobile phones. This lithium-ion secondary battery is generally classified into two kinds, namely, a lithium-ion secondary battery using a liquid-type electrolyte (including a liquid electrolyte and a gel-type electrolyte), and a so-called all solid type lithium-ion secondary battery using a solid electrolyte. Of these two kinds of lithium-ion secondary battery, the all solid type lithium-ion secondary battery does not have a risk of liquid leakage and firing, and has a higher degree of safety, unlike the lithium-ion secondary battery using the liquid-type electrolyte. In favor of this advantage, there have been growing developments in the field of the all solid type lithium-ion secondary battery, expecting a further increased demand for the all solid type lithium-ion secondary battery.

Japanese Patent No. 3852169 (Patent Document 1) discloses an example of a lithium-ion secondary battery which is produced by forming: a positive electrode layer in the form of an organic polymer coating layer containing a positive electrode active substance, on a positive electrode collector layer; a negative electrode layer in the form of an organic polymer coating layer containing a negative electrode active substance, on a negative electrode collector layer; and a solid electrolyte layer in the form of an organic polymer coating layer containing a lithium salt, such that the positive and negative electrode layers are superposed on the respective opposite surfaces of the solid electrolyte layer.

In the lithium-ion secondary battery configured as described above, the positive electrode layer, the negative electrode layer and the solid electrolyte layer are all constituted by the organic polymer films. Accordingly, these positive and negative electrode layers and the solid electrolyte layer exhibit an adequate degree of flexibility or plasticity, and an accordingly high degree of bending or flexural strength.

In this lithium-ion secondary battery, however, the positive and negative electrode layers and the solid electrolyte layer are coating layers, which have thicknesses not smaller than several tens of µm, so that there is a limitation in the amount of reduction of the thicknesses of the positive and negative electrode layers and the solid electrolyte layer in an effort to reduce the overall size of the lithium-ion secondary battery and to improve its output density. Further, the production of the lithium-ion secondary battery requires an additional device for drying the positive and negative electrode layers and the solid electrolyte layer, which are formed in a wet process, so that the cost of production is undesirably increased. In addition, an extra time is required for drying the positive and negative electrode layers and the solid electrolyte layer after these layers are formed, so that the required cycle time of production of each lithium-ion secondary battery is necessarily prolonged, giving rise to a problem of low productivity of the battery.

Further, the lithium-ion secondary battery disclosed in the above-identified publication has the following drawbacks due to its construction wherein the positive and negative electrode layers formed separately from the solid electrolyte layer are merely laminated on the respective opposite surfaces of the solid electrolyte layer.

Namely, the above-described lithium-ion secondary battery wherein the positive electrode layer and the negative electrode layer are superposed or laminated on the solid electrolyte layer inevitably has gaps between the solid electrolyte layer and the positive and negative electrode layers, posing a problem that the gaps prevent smooth movement or transportation of lithium ions between the positive electrode layer and the solid electrolyte layer, and between the negative electrode layer and the solid electrolyte layer. The negative and positive electrode layers may be formed by a thermal bonding process, integrally with the solid electrolyte layer. In this case, too, however, the gaps between the solid electrolyte layer and the positive and negative electrode layers cannot be completely eliminated, that is, extremely minute gaps preventing the movement of the lithium ions still remain between the solid electrolyte layer and the positive and negative electrode layers.

Accordingly, the prior art lithium-ion secondary battery in which the positive and negative electrode layers and the solid electrolyte layers which have been formed separately from each other are laminated on each other suffers from a high degree of interface resistance between the solid electrolyte layer and the positive and negative electrode layers, which is a big barrier to an improvement of performance of the battery.

### PRIOR ART DOCUMENT

### Patent Document

Patent Document 1: Japanese Patent No. 3852169

### SUMMARY OF THE INVENTION

The present invention was made in view of the background art described above. It is therefore a first object of the present invention to provide a lithium-ion secondary battery which is configured to permit effective improvement of its output density and effective reduction of its size, and sufficient improvement of its performance owing to reduction of an interface resistance between its solid electrolyte layer and its positive and negative electrode layers, and which can be produced at a minimum cost and with a high degree of productivity. Second and third objects of the invention are respectively to provide a method and an apparatus which permit efficient production of a lithium-ion secondary battery having such excellent properties.

The first object indicated above can be achieved according to a first aspect of this invention, which provides a lithium-ion secondary battery having a battery cell including a positive electrode collector layer, a positive electrode layer, a solid electrolyte layer, a negative electrode layer and a negative electrode collector layer, which are laminated on each other in this order of description, wherein the positive electrode layer is constituted by a positive-electrode vapor-deposited polymer film which is formed integrally on a surface of the positive electrode collector layer and which contains a positive electrode active substance, and the negative electrode layer is constituted by a negative-electrode vapor-deposited polymer film which is formed integrally on a surface of the negative electrode collector layer and which contains a negative electrode active substance, while the solid electrolyte layer is constituted by a laminar body consisting of a positive-electrode-side ion-conductive vapor-deposited polymer film which is formed integrally on a surface of the positive electrode layer and which contains a lithium salt, and a negative-electrode-side ion-conductive vapor-deposited polymer film which is formed integrally on a surface of the negative electrode layer and which contains a lithium salt, the positive-electrode-side and negative-electrode-side ion-conductive vapor-deposited polymer films being laminated on each other.

In a first preferred form of the lithium-ion secondary battery of the invention, lithium ions and anions derived from the lithium salt contained in the positive-electrode-side and negative-electrode-side vapor-deposited polymer films of the solid electrolyte layer are unevenly distributed in the solid electrolyte layer such that a content of the lithium ions is higher in thickness portions of the positive-electrode-side and negative-electrode-side vapor-deposited polymer films which are respectively adjacent to the positive and negative electrode layers, than in the other thickness portions respectively remote from the positive and negative electrode layers, and such that a content of the anions is higher in the above-indicated other thickness portions respectively remote from the positive and negative electrode layers, than in the thickness portions respectively adjacent to the positive and negative electrode layers.

In a second preferred form of the lithium-ion secondary battery of the invention, the secondary battery is constituted by a first laminar member consisting of the positive electrode collector layer, the positive electrode layer, and a first portion of the solid electrolyte layer, which are integrally laminated on each other, and a second laminar member consisting of the negative electrode collector layer, the negative electrode layer, and a remaining second portion of the solid electrolyte layer, which are integrally laminated on each other, the first and second laminar members being laminated on each other after application of an electric or magnetic field to the first and second laminar members to attract lithium ions derived from the lithium salt contained in the positive-electrode-side and negative-electrode-side vapor-deposited polymer films of the solid electrolyte layer, toward thickness portions of the positive-electrode-side and negative-electrode-side vapor-deposited polymer films which are respectively adjacent to the positive and negative electrode layers, so that the lithium ions are unevenly distributed in the solid electrolyte layer such that a content of the lithium ions is higher in the thickness portions of the positive-electrode-side and negative-electrode-side vapor-deposited polymer films respectively adjacent to the positive and negative electrode layers, than in the other thickness portions respectively remote from the positive and negative electrode layers.

In a third preferred form of the lithium-ion secondary battery of the invention, thickness portions of the positive-electrode-side and negative-electrode-side vapor-deposited polymer films of the solid electrolyte layer which are respectively adjacent to the positive and negative electrode layers are formed of a polymer having a functional group which includes an element of high electronegativity which attracts lithium ions derived from the lithium salt contained in the positive-electrode-side and negative-electrode-side vapor-deposited polymer films, toward the thickness portions of the positive-electrode-side and negative-electrode-side vapor-deposited polymer films respectively adjacent to the positive and negative electrode layers, for unevenly distributing the lithium ions in the solid electrolyte layer such that a content of the lithium ions is higher in the thickness portions of the positive-electrode-side and negative-electrode-side vapor-deposited polymer films respectively adjacent to the positive and negative electrode layers, than in the other thickness portions respectively remote from the positive and negative electrode layers.

In a fourth preferred form of the lithium-ion secondary battery of the invention, the positive-electrode and negative-electrode vapor-deposited polymer films respectively containing the positive and negative electrode active substances have ion conductivity.

In a fifth preferred form of the lithium-ion secondary battery of the invention, the positive-electrode and negative-electrode vapor-deposited polymer films respectively containing the positive and negative electrode active substances have electron conductivity.

In a sixth preferred form of the lithium-ion secondary battery of the invention, the battery cell further includes a positive-electrode-side mixture layer which is interposed between the positive electrode layer and the solid electrolyte layer and which is formed of a mixture of a first polymer used to form the positive-electrode vapor-deposited polymer film containing the positive electrode active substance, and a second polymer used to form the positive-electrode-side vapor-deposited polymer film containing the lithium salt, such that a content of the first polymer in the positive-electrode-side mixture layer gradually decreases in a direction from the positive electrode layer toward the solid electrolyte layer, while a content of the second polymer in the positive-electrode-side mixture layer gradually increases in the direction from the positive electrode layer toward the solid electrolyte layer.

In a seventh preferred form of the lithium-ion secondary battery of the invention, the battery cell further includes a negative-electrode-side mixture layer which is interposed between the negative electrode layer and the solid electrolyte layer and which is formed of a mixture of a third polymer used to form the negative-electrode vapor-deposited polymer film containing the negative electrode active substance, and a fourth polymer used to form the negative-electrode-side vapor-deposited polymer film containing the lithium salt, such that a content of the third polymer in the negative-electrode-side mixture layer gradually decreases in a direction from the negative electrode layer toward the solid electrolyte layer, while a content of the fourth polymer in the negative-electrode-side mixture layer gradually increases in the direction from the negative electrode layer toward the solid electrolyte layer.

The second object indicated above can be achieved according to a second aspect of this invention, which provides a method of producing a lithium-ion secondary battery having a battery cell including a positive electrode collector layer, a positive electrode layer, a solid electrolyte layer, a negative electrode layer and a negative electrode collector layer, which are laminated on each other in this order of description, comprising (a) a step of preparing the positive electrode collector layer, (b) a step of preparing the negative electrode collector layer, (c) a step of forming, as the positive electrode layer, a positive-electrode vapor-deposited polymer film containing a positive electrode active substance, integrally on a surface of the positive electrode collector layer, (d) a step of integrally forming, on a surface of the positive electrode layer formed integrally on the positive electrode collector layer, a positive-electrode-side vapor-deposited polymer film containing an ion-conductivity rendering substance including a lithium salt, as a first solid electrolyte layer portion which is a thickness portion of the solid electrolyte layer adjacent to the positive electrode layer, for thereby producing a first laminar member consisting of the positive electrode collector layer, the positive electrode layer and the first solid electrolyte layer portion which are laminated on each other, (e) a step of forming, as the negative electrode layer, a negative-electrode vapor-deposited polymer film containing a negative electrode active substance, integrally on a surface of the negative electrode collector layer, (f) a step of integrally forming, on a surface of the negative electrode layer formed integrally on the negative electrode collector layer, a negative-electrode-side vapor-deposited polymer film containing an ion-conductivity rendering substance including a lithium salt, as a second solid electrolyte layer portion which is a remaining thickness portion of the solid electrolyte layer adjacent to the negative electrode layer, for thereby producing a second laminar member consisting of the negative electrode collector layer, the negative electrode layer and the second solid electrolyte layer portion which are laminated on each other, and (g) a step of laminating the first and second laminar members on each other, with the first and second solid electrolyte layer portions being held in contact with each other.

In a first preferred form of the method of the invention, the steps of forming the positive-electrode-side and negative-electrode-side vapor-deposited polymer films of the first and second solid electrolyte layer portions comprise unevenly distributing lithium ions and anions derived from the lithium salt contained in the positive-electrode-side and negative-electrode-side vapor-deposited polymer films, in the solid electrolyte layer, before lamination of the first and second laminar members on each other, such that a content of the lithium ions is higher in a thickness portion of the first solid electrolyte layer portion adjacent to the positive electrode layer, than in the other thickness portion of the first solid electrolyte layer portion remote from the positive electrode layer, while a content of the anions is higher in the above-indicated other thickness portion of the first solid electrolyte layer portion, and such that a content of the lithium ions is higher in a thickness portion of the second solid electrolyte layer portion adjacent to the negative electrode layer, than in the other thickness portion of the second solid electrolyte portion remote from the negative electrode layer, while a content of the anions is higher in the above-indicated other thickness portion of the second solid electrolyte layer portion.

In a second preferred form of the method of the invention, the steps of forming the positive-electrode-side and negative-electrode-side vapor-deposited polymer films of the first and second solid electrolyte layer portions comprise applying an electric or magnetic field to the first and second laminar members before lamination thereof on each other, to attract lithium ions derived from the lithium salt contained in the positive-electrode-side and negative-electrode-side vapor-deposited polymer films, toward thickness portions of the positive-electrode-side and negative-electrode-side vapor-deposited polymer films which are respectively adjacent to the positive and negative electrode layers, so that the lithium ions are unevenly distributed in the solid electrolyte layer such that a content of the lithium ions is higher in the thickness portions of the positive-electrode-side and negative-electrode-side vapor-deposited polymer films respectively adjacent to the positive and negative electrode layers, than in the other thickness portions respectively remote from the positive and negative electrode layers.

In a third preferred form of the method of the invention, the steps of forming the positive-electrode-side and negative-electrode-side vapor-deposited polymer films of the first and second solid electrolyte layer portions comprise forming thickness portions of the positive-electrode-side and negative-electrode-side vapor-deposited polymer films which are respectively adjacent to the positive and negative electrode layers, of a polymer having a functional group which includes an element of high electronegativity which attracts lithium ions derived from the lithium salt contained in the positive-electrode-side and negative-electrode-side vapor-deposited polymer films, toward the thickness portions of the positive-electrode-side and negative-electrode-side vapor-deposited polymer films respectively adjacent to the positive and negative electrode layers, for unevenly distributing the lithium ions in the solid electrolyte layer such that a content of the lithium ions is higher in the thickness portions of the positive-electrode-side and negative-electrode-side vapor-deposited polymer films respectively adjacent to the positive and negative electrode layers, than in the other thickness portions respectively remote from the positive and negative electrode layers.

In a fourth preferred form of the method of the invention, the step of forming the positive-electrode vapor-deposited polymer film containing the positive electrode active substance comprises blowing the positive electrode active substance dispersed in a first carrier gas, onto the vapor-deposited polymer film being formed on the surface of the positive electrode collector layer, so that the positive electrode active substance is introduced into the vapor-deposited polymer film, whereby the positive electrode layer containing the positive electrode active substance is formed integrally on the positive electrode collector layer.

In a fifth preferred form of the method of the invention, the step of forming the positive-electrode-side vapor-deposited polymer film containing the ion-conductivity rendering substance comprises using only the lithium salt as the ion-conductivity rendering substance, and blowing the lithium salt dispersed in a second carrier gas, onto a vapor-deposited polymer film containing an ion-conductive polymer being formed on a surface of the positive electrode layer integrally formed on the positive electrode collector layer, so that the lithium salt is introduced into the vapor-deposited polymer film containing the ion-conductive polymer, whereby the positive-electrode-side vapor-deposited polymer film containing the lithium salt is formed integrally on the positive electrode layer.

In a sixth preferred form of the method of the invention, the step of forming the positive-electrode-side vapor-deposited polymer film containing the ion-conductivity rendering substance comprises using a liquid ion-conductive polymer in which the lithium salt is dissolved, and blowing particles of the liquid ion-conductive polymer dispersed in a mist state in a third carrier gas, onto the vapor-deposited polymer film being formed on a surface of the positive electrode layer integrally formed on the positive electrode collector layer, so that the particles of the liquid ion-conductive polymer are introduced into the vapor-deposited polymer film, whereby the positive-electrode-side vapor-deposited polymer film containing the lithium salt is formed integrally on the positive electrode layer.

In a seventh preferred form of the method of the invention, the step of forming the negative-electrode vapor-deposited polymer film containing the negative electrode active substance comprises blowing the negative electrode active substance dispersed in a fourth carrier gas, onto the vapor-deposited polymer film being formed on the surface of the negative electrode collector layer, so that the negative electrode active substance is introduced into the vapor-deposited polymer film, whereby the negative electrode layer containing the negative electrode active substance is formed integrally on the negative electrode collector layer.

In an eighth preferred form of the method of the invention, the step of forming the negative-electrode-side vapor-deposited polymer film containing the ion-conductivity rendering substance comprises using only the lithium salt as the ion-conductivity rendering substance, and blowing the lithium salt dispersed in a fifth carrier gas, onto a vapor-deposited polymer film containing an ion-conductive polymer being formed on a surface of the negative electrode layer integrally formed on the negative electrode collector layer, so that the lithium salt is introduced into the vapor-deposited polymer film containing the ion-conductive polymer, whereby the negative-electrode-side vapor-deposited polymer film containing the lithium salt is formed integrally on the negative electrode layer.

In a ninth preferred form of the method of the invention, the step of forming the negative-electrode-side vapor-deposited polymer film containing the ion-conductivity rendering substance comprises using a liquid ion-conductive polymer in which the lithium salt is dissolved, and blowing particles of the liquid ion-conductive polymer dispersed in a mist state in a sixth carrier gas, onto the vapor-deposited polymer film being formed on a surface of the negative electrode layer integrally formed on the negative electrode collector layer, so that the particles of the liquid ion-conductive polymer are introduced into the vapor-deposited polymer film, whereby the negative-electrode-side vapor-deposited polymer film containing the lithium salt is formed integrally on the negative electrode layer.

In a tenth preferred form of the method of the invention, the step of forming the positive-electrode vapor-deposited polymer film containing the positive electrode active substance comprises introducing vapors of a plurality of materials for forming the positive electrode layer, into a reaction chamber in an evacuated state in which the positive electrode collector layer is accommodated, so that the introduced vapors are polymerized to form a vapor-deposited polymer film on the surface of the positive electrode collector layer, and at the same time introducing the positive electrode active substance into the reaction chamber, so that the positive electrode active substance is introduced into the vapor-deposited polymer film, whereby the positive electrode layer containing the positive electrode active substance is formed integrally on the positive electrode collector layer, and the step of forming the positive-electrode-side vapor-deposited polymer film of the first solid electrolyte layer portion comprising introducing vapors of a plurality of materials for forming the first solid electrolyte layer portion, into the reaction chamber, after a predetermined length of time has passed after initiation of the step of forming the positive-electrode vapor-deposited polymer film, so that the introduced vapors are polymerized to form a vapor-deposited polymer film on the surface of the positive electrode layer, and at the same time introducing the ion-conductivity rendering substance into the reaction chamber, so that the ion-conductivity rendering substance is introduced into the vapor-deposited polymer film, whereby the positive-electrode-side vapor-deposited polymer film containing the ion-conductivity rendering substance is formed integrally on the positive electrode layer. In this form of the invention, the amounts of introduction of the vapors of the plurality of materials for forming the positive electrode layer into the reaction chamber to form the positive electrode layer are gradually reduced to zero after initiation of introduction of the vapors of the plurality of materials for forming the first solid electrolyte layer portion into the reaction chamber, so that polymerization of the plurality of materials for forming the positive electrode layer and polymerization of the plurality of materials for forming the first solid electrolyte layer portion take place concurrently with each other, to form a positive-electrode-side mixture layer on the above-indicated surface of the positive electrode layer, the mixture layer being formed of a mixture consisting of a product obtained by the polymerization of the plurality of materials for forming the positive electrode layer and a product obtained by the polymerization of the plurality of materials for forming the first solid electrolyte layer portion.

In an eleventh preferred form of the method of the invention, the step of forming the negative-electrode vapor-deposited polymer film containing the negative electrode active substance comprises introducing vapors of a plurality of materials for forming the negative electrode layer, into a reaction chamber in an evacuated state in which the negative electrode collector layer is accommodated, so that the introduced vapors are polymerized to form a vapor-deposited polymer film on the surface of the negative electrode collector layer, and at the same time introducing the negative electrode active substance into the reaction chamber, so that the negative electrode active substance is introduced into the vapor-deposited polymer film, whereby the negative electrode layer containing the negative electrode active substance is formed integrally on the negative electrode collector layer, and the step of forming the negative-electrode-side vapor-deposited polymer film of the second solid electrolyte layer portion comprising introducing vapors of a plurality of materials for forming the second solid electrolyte layer portion, into the reaction chamber, after a predetermined length of time has passed after initiation of the step of forming the negative-electrode vapor-deposited polymer film, so that the introduced vapors are polymerized to form a vapor-deposited polymer film on the surface of the negative electrode layer, and at the same time introducing the ion-conductivity rendering substance into the reaction chamber, so that the ion-conductivity rendering substance is introduced into the vapor-deposited polymer film, whereby the negative-electrode-side vapor-deposited polymer film containing the ion-conductivity rendering substance is formed integrally on the negative electrode layer. In this form of the invention, the amounts of introduction of the vapors of the plurality of materials for forming the negative electrode layer into the reaction chamber to form the negative electrode layer are gradually reduced to zero after initiation of introduction of the vapors of the plurality of materials for forming the second solid electrolyte layer portion into the reaction chamber, so that polymerization of the plurality of materials for forming the negative electrode layer and polymerization of the plurality of materials for forming the second solid electrolyte layer portion take place concurrently with each other, to form a negative-electrode-side mixture layer on the above-described surface of the negative electrode layer, the mixture layer being formed of a mixture consisting of a product obtained by the polymerization of the plurality of materials for forming the negative electrode layer and a product obtained by the polymerization of the plurality of materials for forming the second solid electrolyte layer portion.

In a twelfth preferred form of the method of the invention, the positive electrode collector layer is prepared by forming a vapor-deposited metal film, by a vacuum vapor-deposition process, on a surface of a substrate accommodated in a reaction chamber in an evacuated state.

In a thirteenth preferred form of the method of the invention, the negative electrode collector layer is prepared by forming a vapor-deposited metal film, by a vacuum vapor-deposition process, on a surface of a substrate accommodated in a reaction chamber in an evacuated state.

The third object indicated above can be achieved according to a third aspect of this invention, which provides an apparatus for producing a lithium-ion secondary battery having a battery cell including a positive electrode collector layer, a positive electrode layer, a solid electrolyte layer, a negative electrode layer and a negative electrode collector layer, which are laminated on each other in this order of description, comprising (a) a first laminar member producing unit configured to produce a first laminar member consisting of the positive electrode collector layer, the positive electrode layer and a first solid electrolyte layer portion, which are integrally laminated on each other, the first solid electrolyte layer portion being a thickness portion of the solid electrolyte layer adjacent to the positive electrode layer, (b) a second laminar member producing unit configured to produce a second laminar member consisting of the negative electrode collector layer, the negative electrode layer and a second solid electrolyte layer portion, which are integrally laminated on each other, the second solid electrolyte layer portion being a thickness portion of the solid electrolyte layer adjacent to the negative electrode layer, and (c) a battery cell producing unit configured to laminate the first and second laminar members on each other, with the first and second solid electrolyte layer portions being held in contact with each other, and wherein the first laminar member producing unit including positive electrode layer forming means for forming, as the positive electrode layer, a positive-electrode vapor-deposited polymer film containing a positive electrode active substance, integrally on a surface of the positive electrode collector layer, and first solid electrolyte layer portion forming means for integrally forming, on a surface of the positive electrode layer formed by the positive electrode layer forming means, a positive-electrode-side vapor-deposited polymer film containing an ion-conductivity rendering substance including a lithium salt, as the first solid electrolyte layer portion, and wherein the second laminar member producing unit including negative electrode layer forming means for forming, as the negative electrode layer, a negative-electrode vapor-deposited polymer film containing a negative electrode active substance, integrally on a surface of the negative electrode collector layer, and second solid electrolyte layer portion forming means for integrally forming, on a surface of the negative electrode layer formed by the negative electrode layer forming means, a negative-electrode-side vapor-deposited polymer film containing an ion-conductivity rendering substance including a lithium salt, as the second solid electrolyte layer portion.

In a first preferred form of the apparatus of the invention, the positive electrode layer forming means includes first vapor-deposited polymer film forming means for forming a vapor-deposited polymer film by a vapor-deposition polymerization process integrally on the surface of the positive electrode collector layer, and positive electrode active substance introducing means for introducing the positive electrode active substance into the vapor-deposited polymer film being formed by the first vapor-deposited polymer film forming means, the first vapor-deposited polymer film forming means and the positive electrode active substance introducing means cooperating to form the positive-electrode vapor-deposited polymer film containing the positive electrode active substance, integrally on the surface of the positive electrode collector layer, the first solid electrolyte layer portion forming means including second vapor-deposited polymer film forming means for forming a vapor-deposited polymer film by a vapor-deposition polymerization process integrally on the surface of the positive electrode layer formed integrally on the positive electrode collector layer, and first lithium salt introducing means for introducing the ion-conductivity rendering substance including the lithium salt, into the vapor-deposited polymer film being formed by the second vapor-deposited polymer film forming means, the second vapor-deposited polymer film forming means and the first lithium salt introducing means cooperating to form the positive-electrode-side vapor-deposited polymer film containing the lithium salt, integrally on the surface of the positive electrode layer, the negative electrode layer forming means includes third vapor-deposited polymer film forming means for forming a vapor-deposited polymer film by a vapor-deposition polymerization process integrally on the surface of the negative electrode collector layer, and negative electrode active substance introducing means for introducing the negative electrode active substance into the vapor-deposited polymer film being formed by the third vapor-deposited polymer film forming means, the third vapor-deposited polymer film forming means and the negative electrode active substance introducing means cooperating to form the negative-electrode vapor-deposited polymer film containing the negative electrode active substance, integrally on the surface of the negative electrode collector layer, and the second solid electrolyte layer portion forming means including fourth vapor-deposited polymer film forming means for forming a vapor-deposited polymer film by a vapor-deposition polymerization process integrally on the surface of the negative electrode layer formed integrally on the negative electrode collector layer, and second lithium salt introducing means for introducing the ion-conductivity rendering substance including the lithium salt, into the vapor-deposited polymer film being formed by the fourth vapor-deposited polymer film forming means, the fourth vapor-deposited polymer film forming means and the second lithium salt introducing means cooperating to form the negative-electrode-side vapor-deposited polymer film containing the lithium salt, integrally on the surface of the negative electrode layer.

The apparatus according to a second preferred form of the invention further comprises first unevenly distributing means for applying an electric or magnetic field to the first laminar member produced by the first laminar member producing unit, to attract lithium ions derived from the lithium salt contained in the positive-electrode-side vapor-deposited polymer film, toward a thickness portion of the positive-electrode-side vapor-deposited polymer film which is adjacent to the positive electrode layer, so that the lithium ions are unevenly distributed in the positive-electrode-side vapor-deposited polymer film such that a content of the lithium ions is higher in the thickness portion adjacent to the positive electrode layer, than in the other thickness portion remote from the positive electrode layer, while a content of anions derived from the lithium salt is higher in the other thickness portion remote from the positive electrode layer, than in the thickness portion adjacent to the positive electrode layer, and second unevenly distributing means for applying an electric or magnetic field to the second laminar member produced by the second laminar member producing unit, to attract lithium ions derived from the lithium salt contained in the negative-electrode-side vapor-deposited polymer film, toward a thickness portion of the negative-electrode-side vapor-deposited polymer film which is adjacent to the negative electrode layer, so that the lithium ions are unevenly distributed in the negative-electrode-side vapor-deposited polymer film such that a content of the lithium ions is higher in the thickness portion adjacent to the negative electrode layer, than in the other thickness portion remote from the negative electrode layer, while a content of anions derived from the lithium salt is higher in the other thickness portion remote from the negative electrode layer, than in the thickness portion adjacent to the negative electrode layer.

Namely, the positive and negative electrode layers and the solid electrolyte layer provided in the lithium-ion secondary battery of the present invention are all constituted by the vapor-deposited polymer films, which are formed by a vapor-deposition polymerization process, which is a kind of a vacuum thin-film forming process, with extremely small thicknesses of several tens of nm to several tens of µm, and a high rate of formation. Accordingly, the present lithium-ion secondary battery wherein each of the positive and negative electrode layers and the solid electrolyte layer is constituted by the vapor-deposited polymer film has solved all of the drawbacks which are encountered in the lithium-ion secondary battery wherein the positive and negative electrode layers and the solid electrolyte layer are constituted by coating layers.

In addition, the solid electrolyte layer provided in the lithium-ion secondary battery according to the invention is constituted by the two vapor-deposited polymer films, and one of these two vapor-deposited polymer films is formed integrally with the positive electrode layer while the other vapor-deposited polymer film is formed integrally with the negative electrode layer. Accordingly, there remain no gap preventing the movement or transportation of the lithium ions between the positive electrode layer and the solid electrolyte layer, and between the negative electrode layer and the solid electrolyte layer, in the present lithium-ion secondary battery, so that the interface resistance between the solid electrolyte layer and the positive and negative electrode layers can be effectively minimized. As a result, the performance of the secondary battery can be significantly and effectively improved.

Further, the two vapor-deposited polymer films constituting the solid electrolyte layer provided in the present lithium-ion secondary battery are superposed or laminated on each other, resulting in formation of a gap which tends to prevent the movement of the lithium ions, in an intermediate portion of the solid electrolyte layer in the direction of its thickness. During charging and discharging of the lithium-ion secondary battery, however, the movement of the lithium ions need not take place in the intermediate portion of the solid electrolyte layer in its thickness direction, as long as the lithium ions vigorously move between the positive electrode layer and the corresponding one end of the solid electrolyte layer in its thickness direction, and between the negative electrode layer and the other end of the solid electrolyte layer. Hence, the formation of the gap tending to prevent the movement of the lithium ions in the intermediate portion of the solid electrolyte layer will not adversely affect the performance of the lithium-ion secondary battery.

Thus, the lithium-ion secondary battery according to this invention is configured to effectively permit an improved output density, a reduced size, and a sufficient improvement of its performance owing to reduction of the interface resistance between its solid electrolyte layer and its positive and negative electrode layers, and which can be produced at a minimum cost and with a high degree of productivity.

The method of producing the lithium-ion secondary battery according to the invention permits the production of the secondary battery at a minimum cost and with a high degree of productivity, such that the secondary battery has an improved output density, a reduced size, and a sufficiently improved performance owing to reduction of the interface resistance between its solid electrolyte layer and its positive and negative electrode layers.

The apparatus for producing the lithium-ion secondary battery according to the invention also permits the production of the secondary battery at a minimum cost and with a high degree of productivity, such that the secondary battery has an improved output density, a reduced size, and a sufficiently improved performance owing to reduction of the interface resistance between its solid electrolyte layer and its positive and negative electrode layers.

### BRIEF DESCRIPTION OF THE DRAWINGS

Fig. 1 is an enlarged fragmentary cross sectional view of a lithium-ion secondary battery having a construction according to a first embodiment of the present invention;
Fig. 2 is a schematic view of a production apparatus according to the first embodiment for producing the lithium-ion secondary battery of Fig. 1;
Fig. 3 is a view corresponding to that of Fig. 1, showing a lithium-ion secondary battery according to a second embodiment of the invention;
Fig. 4 is a schematic view of a production apparatus according to the second embodiment for producing the lithium-ion secondary battery of Fig. 3;
Fig. 5 is a schematic view of a production apparatus according to a third embodiment of the invention for producing the lithium-ion secondary battery of Fig. 3;
Fig. 6 is a schematic view of a production apparatus according to a fourth embodiment of the invention for producing the lithium-ion secondary battery of Fig. 3;
Fig. 7 is a view corresponding to that of Fig. 1, showing a lithium-ion secondary battery according to a fifth embodiment of the invention; and
Fig. 8 is a schematic view of a production apparatus according to the fifth embodiment for producing the lithium-ion secondary battery of Fig. 7.

### DETAILED DESCRIPTION OF THE INVENTION

To further clarify the present invention, preferred embodiments of the invention will be described in detail by reference to the drawings.

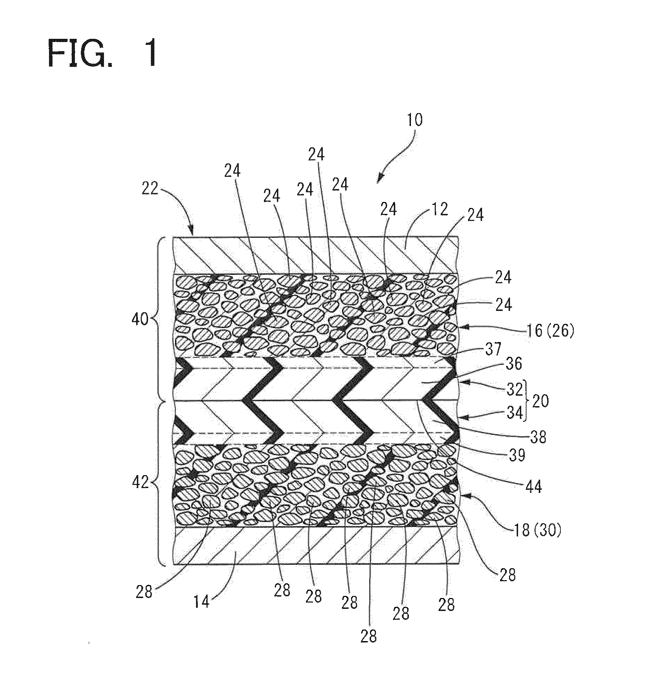

Referring first to the fragmentary longitudinal cross sectional view of Fig. 1, there is shown a lithium-ion secondary battery 10 constructed according to a first embodiment of this invention. As shown in Fig. 1, the lithium-ion secondary battery 10 of the present embodiment is constituted by one battery cell or cell element 22 in the form of a laminar structure consisting of a positive electrode collector layer 12, a positive electrode layer 16, a solid electrolyte layer 20, a negative electrode layer 18 and a negative electrode collector layer 14, which are laminated on each other in this order of description.

In the present lithium-ion secondary battery 10, the positive electrode collector layer 12 is formed of an aluminum foil, while the negative electrode collector layer 14 is formed of a copper foil. In this respect, it is noted that the positive electrode collector layer 12 and the negative electrode collector layer 14 may be formed of any materials other than aluminum and copper, such as titanium, nickel, iron and other metallic materials, and alloys of those metallic materials. It is also noted that the positive and negative electrode collector layers 12, 14 may be vapor-deposited films of metallic materials.

The positive electrode layer 16 is constituted by a positive-electrode vapor-deposited polymer film 26 which contains a positive electrode active substance 24 and which is formed over an entire area of one of the opposite surfaces of the positive electrode collector layer 12 such that the polymer film 26 is integral with the positive electrode collector layer 12. This positive-electrode vapor-deposited polymer film 26 is principally formed of a resin material, and a multiplicity of particles or granules of the positive electrode active substance 24 which are bonded together by the resin material.

In the present embodiment, the positive electrode active substance 24 contained in the positive-electrode vapor-deposited polymer film 26 is LiCoO₂ However, the positive electrode active substance 24 is not limited to LiCoO₂, but may be any active substance used in the prior art lithium-ion secondary battery. For instance, the positive electrode active substance 24 may be one or any combination of: Li(Ni-Mn-Co)O₂ (Ni of which may be partially replaced by Co or Mn); LiNiO₂; LiMn₂O₄; LiFePO₄; LiMnₓFe₁₋ₓPO₄; V₂O₅; V₆O₁₃; and TiS₂.

The negative electrode layer 18 is constituted by a vapor-deposited polymer film 30 which contains a negative electrode active substance 28 and which is formed over an entire area of one of the opposite surfaces of the negative electrode collector layer 14 such that the polymer film 30 is integral with the negative electrode collector layer 14. This vapor-deposited polymer film 30 is principally formed of a resin material, and a multiplicity of particles or granules of the negative electrode active substance 28 which are bonded together by the resin material.

In the present embodiment, the negative electrode active substance 28 contained in the vapor-deposited polymer film 30 is natural graphite. However, the negative electrode active substance 28 is not limited to the natural graphite, but may be any active substance used in the prior art lithium-ion secondary battery. For instance, the negative electrode active substance 28 may be one or any combination of: hard carbon; carbon nano tubes; carbon nano walls; mesophase carbon micro beads; mesophase carbon fibers; lithium metals; lithium-aluminum alloys; intercalated lithium compounds in which lithium is intercalated in graphite or carbon; Li₄Ti₅O₁₂; Si; SiO; alloys of Si; Sn; SnO; alloys of Sn; and MnO₂.

The positive electrode active substance 24 and the negative electrode active substance 28 are not particularly limited in particle size, but the average size of the primary particles measured by a scanning electron microscope, or the average size of the secondary particles which are agglomerates of the primary particles is generally selected within a range of about 10nm-50µm, since the average size of the primary or secondary particles larger than 50µm not only makes it difficult to reduce the thickness of the lithium-ion secondary battery 10, but also gives rise to a problem of reduction of the discharge capacity when the current density is relatively high, and since the average size of the primary or secondary particles smaller than 10nm results in an extreme increase of the surface area per unit weight of the positive and negative electrode active substances 24, 28, and an increase of the required amount of use of an auxiliary electrically conducive agent, giving rise to a risk of reduction of the energy density of the lithium-ion secondary battery 10.

As described above, the positive electrode layer 16 and the negative electrode layer 18 are respectively constituted by the positive-electrode vapor-deposited polymer film 26 and the negative-electrode vapor-deposited polymer film 30 which are formed by a vapor-deposition polymerization process which is a kind of a vacuum dry process. Accordingly, the thicknesses of the positive and negative electrode layers 16, 18 can be controlled on the order of several tens of nanometers, and can therefore be controlled to be extremely small and uniform. Further, the amount of impurities contained in the positive and negative electrode layers 16, 18 is sufficiently reduced.

In the present embodiment, each of the positive-electrode and negative-electrode vapor-deposited polymer films 26, 30 respectively containing the positive and negative electrode active substances 24, 28 is formed of polyaniline, by irradiating polyurea with a ultraviolet radiation after the polyurea is formed by a known vapor-deposition polymerization process in vacuum. Thus, the vapor-deposited polymer films 26, 30 have a sufficiently high degree of electron conductivity and exhibit an adequate degree of flexibility or plasticity.

As well known in the art, polymerization to obtain polyurea does not require heat treatment of amine (including diamine, triamine and tetraamine) and isocyanate (including diisocyanate, triisocyanate and tetraisocyanate) used as starting monomer materials, and is carried out with a polyaddition polymerization reaction which does not involve any amount of removal of water and alcohol. Accordingly, the cost of formation of the positive-electrode and negative-electrode vapor-deposited polymer films 26, 30 of polyaniline obtained by irradiating polyurea with the ultraviolet radiation can be reduced in the absence of a need for using a device for the heat treatment in the process of polymerization of the starting monomer materials, and a facility for discharging water and alcohol removed as a result of the polymerization reaction, from a reaction chamber in which the polymerization reaction takes place. Further, polyurea has a high moisture resistance, and advantageously assures a high withstand voltage with higher stability.

The thicknesses of the positive electrode layer 16 constituted by the positive-electrode vapor-deposited polymer film 26 and the negative electrode layer 18 constituted by the negative-electrode vapor-deposited polymer film 30 are generally selected within a range of about 1-200µm, since the thicknesses of the positive and negative electrode layers 16, 18 smaller than 1µm result in insufficient amounts of the positive electrode active substance 24 in the positive electrode layer 16 and the negative electrode active substance 28 in the negative electrode layer 18, leading to a possibility of reduction of the energy density, and since the thicknesses larger than 200µm not only make it difficult to reduce the thickness and size of the lithium-ion secondary battery 10, but also gives rise to a risk of an increase of the internal resistance (ion transfer resistance).

The resin materials used to form the positive-electrode and negative-electrode vapor-deposited polymer films 26, 30 containing the positive and negative electrode active substances 24, 28 are not limited to polyaniline given above by way of example. Namely, the vapor-deposited polymer films 26, 30 may be formed of any other known resin materials which permit the vapor-deposited polymer films 26, 30 to be formed integrally with the respective positive and negative electrode collector layers 12, 14 and which function as a binder for bonding together the particles of the positive and negative electrode active substances 24, 28. For instance, the vapor-deposited polymer films 26, 30 may be formed of polyurea, polyamide, polyimide, polyamideimide, polyester, polyurethane, polyazomethine, acrylic, polyparaxylylene, and perylene, other than polyaniline obtained by irradiating polyurea with a ultraviolet radiation.

Among the resin materials indicated above, the resin materials which have electron conductivity owing to an auxiliary electrically conductive agent contained therein or without this auxiliary agent can be suitably used to form the positive-electrode and negative-electrode vapor-deposited polymer films 26, 30, since the resin materials having the electron conductivity permit a sufficient increase of the electron conductivity and an effective reduction of membrane resistance of the positive electrode layer 16 and the negative electrode layer 18, resulting in an advantageous improvement of the output density of the lithium-ion secondary battery 10.

In particular, the positive-electrode and negative-electrode vapor-deposited polymer films 26, 30 containing the positive and negative electrode active substances 24, 28 are preferably formed of so-called electron-conductive polymers which have high electron conductivity in the absence of the auxiliary electrically conductive agent, and which can be formed by vapor-deposition polymerization. The use of these electron-conductive polymers increases the productivity of the lithium-ion secondary battery 10, owing to the elimination of a step of adding the auxiliary electrically conductive agent to the polymer. For example, the electron-conductive polymers include: polyurea which has a π-conjugated structure and a side chain of which is bonded to a sulfonic acid group or a carboxyl group; and polyaniline which is obtained by irradiating polyurea with a ultraviolet radiation, which has a π-conjugated structure and a side chain of which is bonded to a sulfonic acid group or a carboxyl group.

For example, the auxiliary electrically conductive agents which can be used to increase the electron conductivity of the positive-electrode and negative-electrode vapor-deposited polymer films 26, 30 include: electrically conductive carbon powders such as carbon black; and electrically conductive carbon fibers such as carbon nano fibers and carbon nano tubes.

In the present lithium-ion secondary battery 10, the solid electrolyte layer 20 consists of a first solid electrolyte layer portion 32 formed on the side of the positive electrode layer 16 as seen in the thickness direction, and a second solid electrolyte layer portion 34 formed on the side of the negative electrode layer 18 as seen in the thickness direction.

The first solid electrolyte layer portion 32 has a two-layer structure consisting of a first inner vapor-deposited polymer film 36 constituting an inner part of the solid electrolyte layer 20 (an intermediate part of the solid electrolyte layer 20 as seen in the thickness direction), and a first outer vapor-deposited polymer film 37 constituting an outer part of the solid electrolyte layer 20 (on the side of the positive electrode layer 16 as seen in the thickness direction). Each of these first inner and outer vapor-deposited polymer films 36, 37 has lithium-ion conductivity. The first outer vapor-deposited polymer film 37 is formed over an entire area of one of the opposite surfaces of the positive electrode layer 16 remote from the positive electrode collector layer 12, such that the polymer film 37 is integral with the positive electrode layer 16. The first inner vapor-deposited polymer film 36 is formed integrally with the first outer vapor-deposited polymer film 37. It will be understood that a positive-electrode-side vapor-deposited polymer film which contains a lithium salt and which constitutes the first solid electrolyte layer portion 32 has the two-layer structure consisting of the first inner and outer vapor-deposited polymer films 36, 37.

On the other hand, the second solid electrolyte layer portion 34 has a two-layer structure consisting of a second inner vapor-deposited polymer film 38 constituting another inner part of the solid electrolyte layer 20 (another intermediate part of the solid electrolyte layer 20 as seen in the thickness direction), and a second outer vapor-deposited polymer film 39 constituting another outer part of the solid electrolyte layer 20 (on the side of the negative electrode layer 18 as seen in the thickness direction). Each of these second inner and outer vapor-deposited polymer films 38, 39 has lithium-ion conductivity. The second outer vapor-deposited polymer film 39 is formed over an entire area of one of the opposite surfaces of the negative electrode layer 18 remote from the negative electrode collector layer 14, such that the polymer film 39 is integral with the negative electrode layer 18. The second inner vapor-deposited polymer film 38 is formed integrally with the second outer vapor-deposited polymer film 39. It will be understood that a negative-electrode-side vapor-deposited polymer film which contains a lithium salt and which constitutes the second solid electrolyte layer portion 34 has the two-layer structure consisting of the second inner and outer vapor-deposited polymer films 38, 39.

The first and second solid electrolyte layer portions 32 and 34 are superposed or laminated on each other, at the surfaces of the first and second inner vapor-deposited polymer films 36, 38 which are respectively remote from the positive and negative electrode layers 16, 18 and respectively remote from the first and second outer vapor-deposited polymer films 37, 39, so that the solid electrolyte layer 20 is formed as a laminar body consisting of the first and second solid electrolyte layer portions 32, 34. While the first and second solid electrolyte layer portions 32, 34 are laminated on each other without being bonded together in the present embodiment, these solid electrolyte layer portions 32, 34 may be bonded to each other by a thermal bonding process, for example.

Like the positive and negative electrode layers 16, 18, the solid electrolyte layer 20 is formed by the vapor-deposition polymerization process which is a kind of the vacuum dry process. Accordingly, the thickness of the solid electrolyte layer 20 can also be controlled on the order of several tens of nanometers, and can therefore be controlled to be extremely small and uniform. Further, the amount of impurities contained in the solid electrolyte layer 20 is sufficiently reduced.

Further, the first inner and outer vapor-deposited polymer films 36, 37 giving the first solid electrolyte layer portion 32, and the second inner and outer vapor-deposited polymer films 38, 39 giving the second solid electrolyte layer portion 34 are all formed of polyurea in the present embodiment, so that like the positive and negative electrode layers 16, 18 constituted by the positive-electrode and negative-electrode vapor-deposited polymer films 26, 30 formed of polyaniline, the solid electrolyte layer 20 can be formed at a reduced cost, and has a high withstand voltage with higher stability, and exhibits an adequate degree of flexibility or plasticity.

Polyurea used to form the first inner and outer vapor-deposited polymer films 36, 37 and the second inner and outer vapor-deposited polymer films 38, 39 has a repeating unit structure of polyethylene oxide represented by the following Chemical Formula (1). Further, this polyethylene oxide contains a lithium salt, so that all of the above-indicated four vapor-deposited polymer films 36, 37, 38 and 39 exhibit lithium ion conductivity.

Chemical Formula (1)

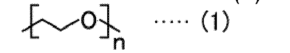

In the present embodiment, the first outer vapor-deposited polymer film 37 formed integrally with the positive electrode layer 16, and the second outer vapor-deposited polymer film 39 formed integrally with the negative electrode layer 18 are formed of a polymer having a functional group which includes an element of high electronegativity which attracts lithium ions, namely, a polymer having a negatively charged functional group. For example, the first and second outer vapor-deposited polymer films 37, 39 are formed of polyurea having a cyano group (-CN) as a side chain.

It is noted, however, that the lithium-ion conductive resin material of the first inner and outer vapor-deposited polymer films 36, 37 constituting the first solid electrolyte layer portion 32 of the solid electrolyte layer 20, and the second inner and outer vapor-deposited polymer films 38, 39 constituting the second solid electrolyte layer portion 34 of the solid electrolyte layer 20 is not limited to polyurea given above by way of example. The four vapor-deposited polymer films 36, 37, 38, 39 may be formed of any other known lithium-ion conductive resin material which permits those polymer films to be formed integrally with the positive and negative electrode layers 16, 18 by the vapor-deposition polymerization process.

Described more specifically, the resin material of the four vapor-deposited polymer films 36-39 of the first and second solid electrolyte layer portions 32, 34 may be selected from among: polyamide having a repeating unit structure of polyethylene oxide and containing a lithium salt in polyethylene oxide; polyimide having a repeating unit structure of polyethylene oxide and containing a lithium salt in polyethylene oxide; polyamideimide having a repeating unit structure of polyethylene oxide and containing a lithium salt in polyethylene oxide; polyester having a repeating unit structure of polyethylene oxide and containing a lithium salt in polyethylene oxide; polyurethane having a repeating unit structure of polyethylene oxide and containing a lithium salt in polyethylene oxide; polyazomethine having a repeating unit structure of polyethylene oxide and containing a lithium salt in polyethylene oxide; polyurea which contains a lithium salt and a side chain of which is bonded to a sulfonic acid group; polyamide which contains a lithium salt and a side chain of which is bonded to a sulfonic acid group; polyimide which contains a lithium salt and a side chain of which is bonded to a sulfonic acid group; polyamideimide which contains a lithium salt and a side chain of which is bonded to a sulfonic acid group; polyester which contains a lithium salt and a side chain of which is bonded to a sulfonic acid group; polyurethane which contains a lithium salt and a side chain of which is bonded to a sulfonic acid group; and polyazomethine which contains a lithium salt and a side chain of which is bonded to a sulfonic acid group.

In summary, the first inner and outer vapor-deposited polymer films 36, 37 and the second inner and outer vapor-deposited polymer films 38, 39 which respectively constitute the first and second solid electrolyte layer portions 32, 34 of the solid electrolyte layer 20 may be formed of the lithium-ion conductive resin material (hereinafter referred to as "resin A") which has a repeating unit structure of polyethylene oxide, which contains a lithium salt in polyethylene oxide, and which can be formed into a film by the vapor-deposition polymerization process, or the lithium-ion conductive resin material (hereinafter referred to as "resin B") which contains a lithium salt, a side chain of which is bonded to a sulfonic acid group, and which can be formed into a film by the vapor-deposition polymerization process. It is noted that the repeating unit structure of polyethylene oxide of the resin A may be bonded to the molecules of the resin A, or may not be bonded to the molecules but merely mixed in the resin A.

All of the first inner and outer vapor-deposited polymer films 36, 37 and the second inner and outer vapor-deposited polymer films 38, 39 need not be formed of the same resin material. For example, at least one of the four vapor-deposited polymer films 36, 37, 38, 39 may be formed of one of the resin materials indicated above, which is different from the resin material or materials of the other vapor-deposited polymer film or films.

In the present embodiment, the first and second outer vapor-deposited polymer films 37, 39 are formed of the above-indicated resin materials which are polymers having, as a side chain, the functional group which includes an element of high electronegativity which attracts lithium ions. More specifically described, the resin materials having any one of the following functional groups as the side chain are selected, for example: cyano group (-CN); fluoro group (-F); chloro group (-Cl); bromo group (-Br); iodo group (-I); carbonyl group (=O); carboxyl group (-COOH); hydroxyl group (-OH); nitro group (-NO₂); and sulfonate group (-SO₃H).

The lithium salt contained in the first and second solid electrolyte layer portions 32 and 34 of the solid electrolyte layer 20 is an ion dissociation compound containing lithium, and is not particularly limited. Any kind of lithium salt conventionally used to impart lithium-ion conductivity to a desired resin material may be used. For instance, LiN(SO₂CF₃)₂, LiN(SO₂C₂F₅)₂, LiBF₄ and LiClO₄ may be used as the lithium salt to be contained in the solid electrolyte layer 20.

The lithium salt is partially dissociated (ionized) in the first solid electrolyte layer portion 32 (first inner and outer vapor-deposited polymer films 36, 37) and the second solid electrolyte layer portion 34 (second inner and outer vapor-deposited polymer films 38, 39) which are formed of the ion-conductive resin material (polyurea having the repeating unit structure of polyethylene oxide, in the present embodiment), so that a portion of the lithium salt contained in the solid electrolyte layer 20 exists in the first and second solid electrolyte layer portions 32, 34, in the form of lithium ions and anions.

In the lithium-ion secondary battery 10 according to the present embodiment, the polymer used to form the first outer vapor-deposited polymer film 37 of the first solid electrolyte layer portion 32 integrally with the positive electrode layer 16, and to form the second outer vapor-deposited polymer film 39 of the second solid electrolyte layer portion 34 integrally with the negative electrode layer 18 has the negatively charged functional group which includes an element of high electronegativity, as described above. Accordingly, the lithium ions derived from the lithium salt existing within the first and second solid electrolyte layer portions 32, 34 are attracted by the negatively charged functional group of the polymer of the first and second outer vapor-deposited polymer films 37, 39, whereby the lithium ions exist more densely in the first outer vapor-deposited polymer film 37 than in the first inner vapor-deposited polymer film 36, and in the second outer vapor-deposited polymer film 39 than in the second inner vapor-deposited polymer film 38.

Namely, the lithium ions exist more densely in a thickness portion of the first solid electrolyte layer portion 32 adjacent to the positive electrode layer 16, than in its intermediate portion and its thickness portion nearer to the negative electrode layer 18 (its thickness portion adjacent to the second solid electrolyte layer portion 34), and in a thickness portion of the second solid electrolyte layer portion 34 adjacent to the negative electrode layer 18, than in its intermediate portion and its thickness portion nearer to the positive electrode layer 16 (its thickness portion adjacent to the first solid electrolyte layer portion 32). That is, the lithium ions are unevenly distributed within the first and second solid electrolyte layer portions 32, 34 such that the local density of the lithium ions is higher in the thickness portion of the first solid electrolyte layer portion 32 adjacent to the positive electrode layer 16 (in the first outer vapor-deposited polymer film 37), and in the thickness portion of the second solid electrolyte layer portion 34 adjacent to the negative electrode layer 18 (in the second outer vapor-deposited polymer film 39).

In the present lithium-ion secondary battery 10, the content of the lithium ions is higher in the thickness portion of the first solid electrolyte layer portion 32 adjacent to the positive electrode layer 16, so that a larger amount of the lithium ions move per unit time at a higher velocity between the active substance 24 in the positive electrode layer 16 and the first solid electrolyte layer portion 32, during charging and discharging of the lithium-ion secondary battery 10. Similarly, the content of the lithium ions is higher in the thickness portion of the second solid electrolyte layer portion 34 adjacent to the negative electrode layer 18, so that a larger amount of the lithium ions move per unit time at a higher velocity between the active substance 28 in the negative electrode layer 18 and the second solid electrolyte layer portion 34, during charging and discharging of the lithium-ion secondary battery 10. As a result, the performance of the secondary battery 10 is significantly and effectively improved.

As described above, it is generally preferred that the positive-electrode vapor-deposited polymer film 26 which constitutes the positive electrode layer 16 and which contains the active substance 24, and the negative-electrode vapor-deposited polymer film 30 which constitutes the negative electrode layer 18 and which contains the active substance 28 are formed of the resin material having electron conductivity, in order to improve the output density of the lithium-ion secondary battery 10. In this respect, the performance of the present lithium-ion secondary battery 10 is improved owing to the higher content of the lithium ions in the thickness portions of the solid electrolyte layer 20 adjacent to the positive and negative electrode layers 16, 18.

Therefore, a sufficient improvement of the output density can be expected even where the positive-electrode and negative-electrode vapor-deposited polymer films 26, 30 are formed of the ion-conductive resin material rather than the electron-conductive resin material. Where the vapor-deposited polymer films 26, 30 are formed of the ion-conductive resin material, there is an advantage that the lithium ions move more smoothly and more rapidly between the active substance 24 in the positive electrode layer 16 and the first solid electrolyte layer portion 32, and between the active substance 28 in the negative electrode layer 18 and the second solid electrolyte layer portion 34.

Where the positive-electrode and negative-electrode vapor-deposited polymer films 26, 30 are formed of the ion-conductive resin material, this ion-conductive resin material is preferably selected from the above-indicated ion-conductive resin materials which are used to form the first solid electrolyte layer portion 32 (first inner and outer vapor-deposited polymer films 36, 37) and the second solid electrolyte layer portion 34 (second inner and outer vapor-deposited polymer films 38, 39), and which may or may not contain a lithium salt.

Although the overall thickness of the solid electrolyte layer 20 consisting of the first and second solid electrolyte layer portions 32, 34 is not particularly limited, it is generally selected within a range of about 50nm-100µm, since the overall thickness smaller than 50nm makes it difficult to ensure sufficient electric insulation between the positive and negative electrode layers 16, 18, giving rise to a possibility of internal short-circuiting, and since the overall thickness larger than 100µm not only makes it difficult to reduce the thickness of the lithium-ion secondary battery 10, but also gives rise to a risk of reduction of the output density due to a high internal resistance.

The thicknesses of the first and second solid electrolyte layer portions 32, 34 are selected such that the overall thickness of the solid electrolyte layer 20 is held within the above-indicated range. Namely, the first and second solid electrolyte layer portions 32, 34 need not have substantially the same thickness value. However, the thickness of each of the first and second solid electrolyte layer portions 32, 34 is preferably selected within a range of about 25nm-50µm.

The thicknesses of the first inner and outer vapor-deposited polymer films 36, 37 and the second inner and outer vapor-deposited polymer films 38, 39 are suitably selected depending upon the overall thickness of the solid electrolyte layer 20, or the thicknesses of the first and second solid electrolyte layer portions 32, 34.

It will be understood from the foregoing description that the lithium-ion secondary battery 10 according to the present embodiment has a first laminar member 40 consisting of the positive electrode collector layer 12, and the positive-electrode vapor-deposited polymer film 26 constituting the positive electrode layer 16, and the first outer and inner vapor-deposited polymer films 37, 36 constituting the first solid electrolyte layer portion 32 (a substantially half thickness portion of the solid electrolyte layer 20), which vapor-deposited polymer films 26, 37, 36 are laminated in this order of description on one of the opposite surfaces of the positive electrode collector layer 12 such that the vapor-deposited polymer films 26, 37, 36 are integral with each other and with the positive electrode collector layer 12, and a second laminar member 42 consisting of the negative electrode collector layer 14, and the vapor-deposited polymer film 30 constituting the negative electrode layer 18, and the second outer and inner vapor-deposited polymer films 39, 38 constituting the second solid electrolyte layer portion 34 (the other half thickness portion of the solid electrolyte layer 20), which polymer films 30, 39, 38 are laminated in this order of description on one of the opposite surfaces of the negative electrode collector layer 14 such that the polymer films 30, 39, 38 are integral with each other and with the negative electrode collector layer 14. These first and second laminar members 40 and 42 are laminated on each other at one of the opposite surfaces of the first inner vapor-deposited polymer film 36 remote from the first outer vapor-deposited polymer film 37, and at one of the opposite surfaces of the second inner vapor-deposited polymer film 38 remote from the second outer vapor-deposited polymer film 39.

Thus, the present lithium-ion secondary battery 10 has a laminar structure consisting of the first and second laminar members 40 and 42 which are laminated on each other without being bonded to each other. The lithium-ion secondary battery 10 has a laminate interface 44 between the first and second laminar members 40, 42, at a middle position of the solid electrolyte layer 20 as seen in its thickness direction. When the lithium-ion secondary battery 10 is in use, a positive terminal and a negative terminal (not shown) are usually connected to the respective positive and negative electrode collector layers 12, 14, and the secondary battery 10 is covered by a known protective film of a laminar structure.

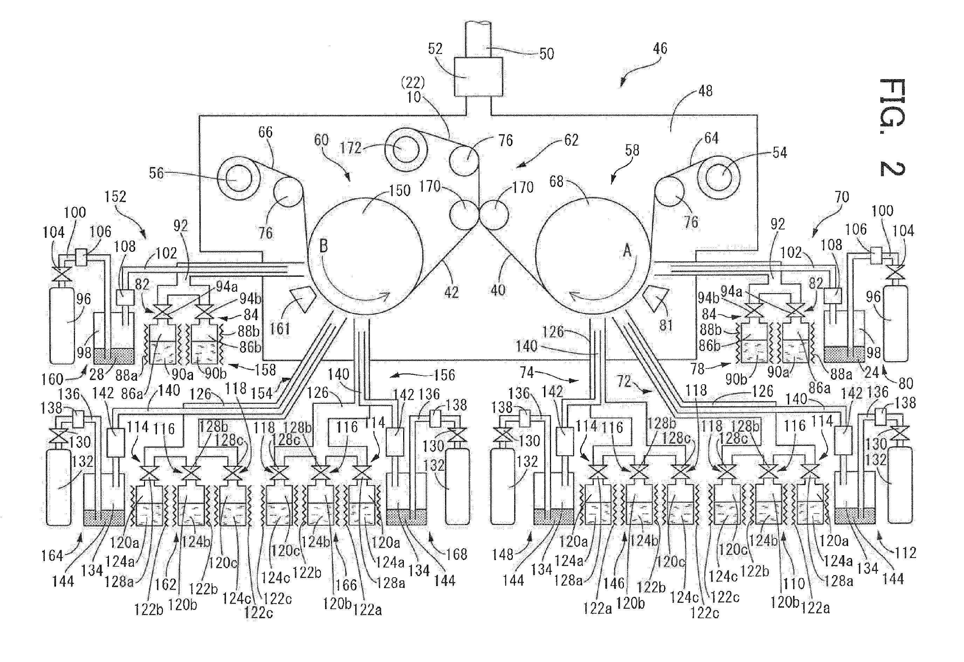

For example, the thus constructed lithium-ion secondary battery 10 is produced by a production apparatus 46 constructed as shown in Fig. 2 according to the present invention.

As is apparent from Fig. 2, the production apparatus 46 has a vacuum chamber 48 as a reaction chamber. This vacuum chamber 48 has an outlet formed through one of its walls, and an exhaust pipe 50 is connected to the outlet. The exhaust pipe 50 is provided with a vacuum pump 52 which is operated to evacuate an interior space of the vacuum chamber 48, by discharging air out of the interior space through the exhaust pipe 50. It will be understood that the exhaust pipe 50 and the vacuum pump 52 constitute evacuating means in the present embodiment.

Within the vacuum chamber 48, there are disposed a first supply roller 54, a second supply roller 56, a first laminar member producing unit 58, a second laminar member producing unit 60, and a battery cell producing unit 62.

Described more specifically, the first and second supply roller 54, 56 are configured to receive respective rolls and to be automatically rotated to rotate the rolls. The roll to be rotated by the first supply roller 54 is a roll of a strip or tape 64 of an aluminum foil which provides the positive electrode collector layer 12, while the roll to be rotated by the second supply roller 56 is a roll of a strip or tape 66 of a copper foil which provides the negative electrode collector layer 14.

The first laminar member producing unit 58 is configured to continuously form the first laminar member 40, and has a first feeding roller 68 disposed within the vacuum chamber 48, and positive electrode layer forming means in the form of a positive electrode layer forming unit 70, and first solid electrolyte layer portion forming means in the form of a first outer vapor-deposited polymer film forming unit 72 and a first inner vapor-deposited polymer film forming unit 74, which forming units 70, 72, 74 are disposed outside the vacuum chamber 48.

The first feeding roller 68 provided in the first laminar member producing unit 58 receives the aluminum foil strip 64 fed from the first supply roller 54 being rotated, and is rotated to further feed the aluminum foil strip 64 in one of its opposite circumferential directions (namely, in a clockwise direction indicated by an arrow A in Fig. 2). It is noted that a reference sign 76 in Fig. 2 denotes two tension rollers.

On the other hand, the positive electrode layer forming unit 70 includes first vapor-deposited polymer film forming means in the form of a vapor-deposited polymer film forming device 78, positive electrode active substance introducing means in the form of a positive electrode active substance introducing device 80, and an ultraviolet irradiating device 81. The vapor-deposited polymer film forming device 78 is configured to form the positive-electrode vapor-deposited polymer film 26 (more precisely, a portion of the vapor-deposited polymer film 26 other than the positive electrode active substance 24) by the vacuum vapor-deposition polymerization process, and has a first vapor source 82 and a second vapor source 84. These first and second vapor sources 82 and 84 have respective material reservoirs 86a and 86b, and respective heaters 88a and 88b.

The material reservoirs 86a, 86b of the first and second vapor sources 82, 84 accommodate respective two different kinds of materials 90a, 90b for forming the positive-electrode vapor-deposited polymer film 26. In the present embodiment wherein the vapor-deposited polymer film 26 is formed of polyaniline, the material reservoir 86a accommodates, as the material 90a in a liquid phase, aromatic diamine such as 1,4-phenylenediamine-2-sulfonic acid while the material reservoir 86b accommodates, as the material 90b in a liquid state, aromatic diisocyanate such as 1,4-phenylene diisocyanate. Those aromatic diamine and aromatic diisocyanate are monomers for obtaining polyurea before irradiation with an ultraviolet radiation. The two kinds of materials 90a, 90b accommodated in the respective material reservoirs 86a, 86b of the first and second vapor sources 82, 84 are heated and evaporated by the respective heaters 88a, 88b.

A vapor supply pipe 92 is provided to connect the material reservoirs 86a, 86b of the first and second vapor sources 82, 84 to the vacuum chamber 48. This vapor supply pipe 92 is open toward the outer circumferential surface of the first feeding roller 68, at its end within the vacuum chamber 48, and is open at the other end to the material reservoirs 86a, 86b through respective shut-off valves 94a, 94b.

The positive electrode active substance introducing device 80 has a gas cylinder 96 charged with a carrier gas (a first carrier gas) such as an argon gas, a nitrogen gas or any other inert gas, and a powder reservoir 98 accommodating the positive electrode active substance 24 (LiCoO₂ in this embodiment) in a powdered form. A gas supply pipe 100 is provided to connect the gas cylinder 96 to the powder reservoir 98, while a powder supply pipe 102 is provided to connect the powder reservoir 98 to the vacuum chamber 48. The powder supply pipe 102 is partially inserted within the vapor supply pipe 92 of the above-described vapor-deposited polymer film forming device 78, such that the outlet end portion of the powder supply pipe 102 located within the vapor supply pipe 92 is open toward the outer circumferential surface of the first feeding roller 68, through the corresponding outlet end portion of the vapor supply pipe 92. Namely, the corresponding outlet end portions of the vapor supply pipe 92 and the powder supply pipe 102 on the side of the vacuum chamber 48 cooperate with each other to form a double-pipe structure.

In the thus constructed positive electrode active substance introducing device 80, the carrier gas supplied from the gas cylinder 96 is introduced into the powder reservoir 98 through the gas supply pipe 100 when a shut-off valve 104 provided adjacent to the gas cylinder 96 is open, so that the positive electrode active substance 24 accommodated within the powder reservoir 98 is dispersed by the carrier gas introduced into the powder reservoir 98, whereby the dispersed active substance 24 is introduced into the vacuum chamber 48, together with the carrier gas, through the powder supply pipe 102 partially inserted within the vapor supply pipe 92. Since the powder supply pipe 102 is partially inserted within the vapor supply pipe 92, the active substance 24 is mixed with the vapors of the two materials 90a, 90b, within the outlet end portion of the vapor supply pipe 92, and a mixture of the vapors of the two materials 90a, 90b, active substance 24 and carrier gas is blown from the outlet open end of the vapor supply pipe 92 onto one of the opposite surfaces of the aluminum foil strip 64 being moved in contact with the outer circumferential surface of the first feeding roller 68, such that the mixture is blown at a predetermined circumferential position of the first feeding roller 68.

The gas supply pipe 100 is provided with a known mass flow controller 106, while the powder supply pipe 102 is provided with a known powder milling device 108. The mass flow controller 106 controls a flow rate of the carrier gas, for regulating a rate of introduction of the active substance 24 into the vacuum chamber 48, while the powder milling device 108 mills or pulverize the active substance 24 flowing through the powder supply pipe 102 together with the carrier gas, for reducing the particle size of the active substance 24, before the active substance 24 is blown onto the above-indicated surface of the aluminum foil strip 64.

The ultraviolet irradiating device 81 is disposed within the vacuum chamber 48, at a position downstream of the outlet open end of the vapor supply pipe 92 in the direction of feeding of the aluminum foil strip 64 by the first feeding roller 68, for the purpose of irradiating the aluminum foil strip 64 with an ultraviolet radiation.

The first outer vapor-deposited polymer film forming unit 72 includes a vapor-deposited polymer film forming device 110, and a lithium salt introducing device 112. The vapor-deposited polymer film forming device 110 is provided to form the first outer vapor-deposited polymer film 37 (more precisely, a portion of the first outer vapor-deposited polymer film 37 other than a lithium-ion conductivity rendering substance 144) by the vacuum vapor-deposition polymerization process, and has a first vapor source 114, a second vapor source 116 and a third vapor source 118. These first, second and third vapor sources 114, 116 and 118 have respective material reservoirs 120a, 120b and 120c, and respective heaters 122a, 122b and 122c.

The material reservoirs 120a, 120b and 120c of the first, second and third vapor sources 114, 116 and 118 accommodate respective three materials 124a, 124b and 124c for the first outer vapor-deposited polymer film 37 of the first solid electrolyte layer portion 32 of the solid electrolyte layer 20, which polymer film 37 is laminated on the positive electrode layer 16. In the present embodiment wherein the first outer vapor-deposited polymer film 37 is formed of polyurea which has a repeating unit structure of polyethylene oxide and a functional group (cyano group) including an element of high electronegativity, the material reservoirs 120a and 120b of the first and second vapor sources 114 and 116 respectively accommodate, as the respective two materials 124a and 124b, ethylene glycol diamine such as diethylene glycol bis(3-aminopropyl) ether, and aromatic diisocyanate having a cyano group such as 1-cyano-3,5-xylylene diisocyanate, in a liquid phase, while the material reservoir 120c of the third vapor source 118 accommodates, as the material 124c, oligo-ethylene oxide (low molecular polyethylene oxide having a molecular weight of 200-2000) in a liquid or solid phase. The three materials 124a, 124b and 124c accommodated in the respective material reservoirs 120a, 120b and 120c of the first, second and third vapor sources 114, 116 and 118 are heated and evaporated by the respective heaters 122a, 122b and 122c.

The two monomer materials used to form the polyurea which has a repeating unit structure of polyethylene oxide and a functional group including an element of high electronegativity may be a combination of the above-indicated monomers, a combination of diethylene glycol bis(3-aminopropyl) ether and 1-fluoro-3,5-xylylene diisocyanate, or a combination of 5-bromobiphenyl-2,4'-diamine and [oxobis(trimethylene) dioxobis(trimethylene)] diisocyanate, for example.

A vapor supply pipe 126 is provided to connect the material reservoirs 120a, 120b, 120c of the first, second and third vapor sources 114, 116, 118 to the vacuum chamber 48. This vapor supply pipe 126 is open at its outlet end within the vacuum chamber 48, toward the outer circumferential surface of the first feeding roller 68, at a position downstream of the outlet open ends of the coaxially disposed vapor supply pipe 92 and powder supply pipe 102 of the positive electrode layer forming unit 70 in the direction of feeding of the aluminum foil strip 64 by the first feeding roller 68, and open at its fixed end to the material reservoirs 120a, 120b, 120c through respective shut-off valves 128a, 128b, 128c.

In the vapor-deposited polymer film forming device 110 constructed as described above, the three materials 124a, 124b, 124c accommodated in the respective material reservoirs 120a, 120b, 120c of the first, second and third vapor sources 114, 116, 118 are heated and evaporated by the respective heaters 122a, 122b, 122c, and the vapors of the three materials 124a, 124b, 124c are introduced into the vacuum chamber 48 through the vapor supply pipe 126 and the respective shut-off valves 128a, 128b, 128c placed in the open state, such that the vapors are blown onto the aluminum foil strip 64 being moved in contact with the outer circumferential surface of the first feeding roller 68.

The lithium salt introducing device 112 has a gas cylinder 132 provided with a shut-off valve 130, a powder reservoir 134, a gas supply pipe 136, a mass flow controller 138, a powder supply pipe 140, and a powder milling device 142. Thus, the lithium salt introducing device 112 is basically identical in construction with the positive electrode active substance introducing device 80 of the positive electrode layer forming unit 70. The gas cylinder 132 is charged with a carrier gas (a second carrier gas) such as an inert gas, while the powder reservoir 134 accommodates the above-indicated lithium-ion conductivity rendering substance 144 in a powdered form, which is LiN(SO₂CF₃)₂ in this embodiment. The powder supply pipe 140 of the lithium salt introducing device 112 is partially inserted within outlet end portion of the vapor supply pipe 126 of the vapor-deposited polymer film forming device 110, such that the outlet end portion of the powder supply pipe 140 located within the outlet end portion of the vapor supply pipe 126 is open toward the outer circumferential surface of the first feeding roller 68, through the corresponding outlet end portion of the vapor supply pipe 126.

In the thus constructed lithium salt introducing device 112, the carrier gas supplied from the gas cylinder 132 is introduced into the powder reservoir 134 through the gas supply pipe 136 when the shut-off valve 130 is open, so that the lithium-ion conductivity rendering substance 144 accommodated within the powder reservoir 134 is dispersed in the carrier gas introduced into the powder reservoir 134, whereby the dispersed lithium-ion conductivity rendering substance 144 is supplied to the outlet end portion of the vapor supply pipe 126, together with the carrier gas, through the powder supply pipe 140. The lithium-ion conductivity rendering substance 144 is mixed with the vapors of the three materials 124a, 124b, 124c within the outlet end portion of the vapor supply pipe 126, and a mixture of the vapors of the three materials 124a, 124b, 124c, lithium-ion conductivity rendering substance 144 and carrier gas is blown from the outlet open end of the vapor supply pipe 126 onto one of the opposite surfaces of the aluminum foil strip 64 being moved in contact with the outer circumferential surface of the first feeding roller 68. Thus, the lithium salt introducing device 112 is configured to introduce the lithium-ion conductivity rendering substance 144 into the first outer vapor-deposited polymer film 37 formed on the surface of the aluminum foil strip 64.

The first inner vapor-deposited polymer film forming unit 74 includes a vapor-deposited polymer film forming device 146, and a lithium salt introducing device 148. The vapor-deposited polymer film forming device 146 is provided to form the first inner vapor-deposited polymer film 36 (more precisely, a portion of the first inner vapor-deposited polymer film 36 other than the lithium-ion conductivity rendering substance 144) by the vacuum vapor-deposition polymerization process. The lithium salt introducing device 148 is provided to introduce the lithium-ion conductivity rendering substance 144 into the first inner vapor-deposited polymer film 36 formed by the vapor-deposited polymer film forming device 146. The vapor-deposited polymer film forming device 146 has the same construction as the vapor-deposited polymer film forming device 110 of the first outer vapor-deposited polymer film forming unit 72, and the lithium salt introducing device 148 has the same construction as the lithium salt introducing device 112 of the fist outer vapor-deposited polymer film forming unit 72.

In Fig. 2, the reference signs used to denote the members and portions of the vapor-deposited polymer film forming device 110 and lithium salt introducing device 112 of the first outer vapor-deposited polymer film forming unit 72 are used to denote the corresponding members and portions of the vapor-deposited polymer film forming device 146 and lithium salt introducing device 148 of the first inner vapor-deposited polymer film forming unit 74, which will not be described redundantly. It will be understood from the foregoing description that the vapor-deposited polymer film forming device 110 of the first outer vapor-deposited polymer film forming unit 72 and the vapor-deposited polymer film forming device 146 of the first inner vapor-deposited polymer film forming unit 74 cooperate with each other to constitute second vapor-deposited polymer film forming means, while the lithium salt introducing device 112 of the first outer vapor-deposited polymer film forming unit 72 and the lithium salt introducing device 148 of the first inner vapor-deposited polymer film forming unit 74 cooperate with each other to constitute first lithium salt introducing means.

The material reservoirs 120a, 120b and 120c of the vapor-deposited polymer film forming device 146 of the first inner vapor-deposited polymer film forming unit 74 accommodate the respective three materials 124a, 124b and 124c for the first inner vapor-deposited polymer film 36 of the first solid electrolyte layer portion 32 of the solid electrolyte layer 20, which polymer film 36 is remote from the positive electrode layer 16. In the present embodiment wherein the first inner vapor-deposited polymer film 36 is formed of polyurea which has a repeating unit structure of polyethylene oxide, the material reservoirs 120a and 120b of the first and second vapor sources 114 and 116 respectively accommodate, as the respective two materials 124a and 124b, ethylene glycol diamine such as diethylene glycol bis(3-aminopropyl) ether, and aromatic diisocyanate such as m-xylylene diisocyanate, in a liquid phase, while the material reservoir 120c of the third vapor source 118 accommodates, as the material 124c, oligo-ethylene oxide (low molecular polyethylene oxide having a molecular weight of 200-2000) in a liquid or solid phase. The powder reservoir 134 of the lithium salt introducing device 148 accommodates the lithium-ion conductivity rendering substance 144 in a powdered form, which is LiN(SO₂CF₃)₂ in this embodiment.

On the other hand, the second laminar member producing unit 60 is configured to continuously form the second laminar member 42, and has a second feeding roller 150 disposed within the vacuum chamber 48, and a negative electrode layer forming unit 152, and second solid electrolyte layer portion forming means in the form of a second outer vapor-deposited polymer film forming unit 154 and a second inner vapor-deposited polymer film forming unit 156, which forming units 152, 154, 156 are disposed outside the vacuum chamber 48.

The second feeding roller 150 provided in the second laminar member producing unit 60 receives the copper foil strip 66 fed from the second supply roller 56 being rotated, and is rotated to further feed the copper foil strip 66 in one of its opposite circumferential directions (namely, in a counterclockwise direction indicated by an arrow B in Fig. 2).

The negative electrode layer forming unit 152 includes third vapor-deposited polymer film forming means in the form of a vapor-deposited polymer film forming device 158, negative electrode active substance introducing means in the form of a negative electrode active substance introducing device 160, and an ultraviolet irradiating device 161. The vapor-deposited polymer film forming device 158 is configured to form the vapor-deposited polymer film 30 (more precisely, a portion of the vapor-deposited polymer film 30 other than the negative electrode active substance 28) by the vacuum vapor-deposition polymerization process. The negative electrode active substance introducing device 160 is configured to introduce the negative electrode active substance 28 into the vapor-deposited polymer film 30 formed by the vapor-deposited polymer film forming device 158. The ultraviolet irradiating device 161 is provided to irradiate the vapor-deposited polymer film 30 containing the negative electrode active substance 28, with an ultraviolet radiation. The vapor-deposited polymer film forming device 158 has the same construction as the vapor-deposited polymer film forming device 78 of the positive electrode layer forming unit 70, and the negative electrode active substance introducing device 160 has the same construction as the positive electrode active substance introducing device 80 of the positive electrode layer forming unit 70, while the ultraviolet irradiating device 161 has the same construction as the ultraviolet irradiating device 81 of the positive electrode layer forming unit 70.

In Fig. 2, the reference signs used to denote the members and portions of the vapor-deposited polymer film forming device 78 and positive electrode active substance introducing device 80 of the positive electrode layer forming unit 70 are used to denote the corresponding members and portions of the vapor-deposited polymer film forming device 158 and negative electrode active substance introducing device 160 of the negative electrode layer forming unit 152, which will not be described redundantly.

In the present embodiment wherein the vapor-deposited polymer film 30 containing the negative electrode active substance 28 is formed of polyaniline, the material reservoirs 86a and 86b of the vapor-deposited polymer film forming device 158 accommodate, as the respective two materials 90a and 90b, the same materials as accommodated in the material reservoirs 86a and 86b of the vapor-deposited polymer film forming device 78. The powder reservoir 98 of the negative electrode active substance introducing device 160 accommodates the negative electrode active substance 28 (natural graphite, in this embodiment) in a powdered form.

The second outer vapor-deposited polymer film forming unit 154 includes a vapor-deposited polymer film forming device 162, and a lithium salt introducing device 164. The vapor-deposited polymer film forming device 162 is provided to form the second outer vapor-deposited polymer film 39 (more precisely, a portion of the second outer vapor-deposited polymer film 39 other than the lithium-ion conductivity rendering substance 144) by the vacuum vapor-deposition polymerization process. The lithium salt introducing device 164 is provided to introduce the lithium-ion conductivity rendering substance 144 into the second outer vapor-deposited polymer film 39 formed by the vapor-deposited polymer film forming device 162. The vapor-deposited polymer film forming device 162 has the same construction as the vapor-deposited polymer film forming device 110 of the first outer vapor-deposited polymer film forming unit 72, while the lithium salt introducing device 164 has the same construction as the lithium salt introducing device 112 of the first outer vapor-deposited polymer film forming unit 72.

In Fig. 2, the reference signs used to denote the members and portions of the vapor-deposited polymer film forming device 110 and lithium salt introducing device 112 of the first outer vapor-deposited polymer film forming unit 72 are used to denote the corresponding members and portions of the vapor-deposited polymer film forming device 162 and lithium salt introducing device 164 of the second outer vapor-deposited polymer film forming unit 154, which will not be described redundantly.

The second inner vapor-deposited polymer film forming unit 156 includes a vapor-deposited polymer film forming device 166, and a lithium salt introducing device 168. The vapor-deposited polymer film forming device 166 is provided to form the second inner vapor-deposited polymer film 38 (more precisely, a portion of the second inner vapor-deposited polymer film 38 other than the lithium-ion conductivity rendering substance 144) by the vacuum vapor-deposition polymerization process. The lithium salt introducing device 168 is provided to introduce the lithium-ion conductivity rendering substance 144 into the second inner vapor-deposited polymer film 38 formed by the vapor-deposited polymer film forming device 166. The vapor-deposited polymer film forming device 166 and the lithium salt introducing device 168 have the same constructions as the vapor-deposited polymer film forming device 146 and the lithium salt introducing device 148 of the first inner vapor-deposited polymer film forming unit 74.

In Fig. 2, the reference signs used to denote the members and portions of the vapor-deposited polymer film forming device 146 and lithium salt introducing device 148 of the first inner vapor-deposited polymer film forming unit 74 are used to denote the corresponding members and portions of the vapor-deposited polymer film forming device 166 and lithium salt introducing device 168 of the second inner vapor-deposited polymer film forming unit 156, which will not be described redundantly. It will be understood from the foregoing description that the vapor-deposited polymer film forming device 162 of the second outer vapor-deposited polymer film forming unit 154 and the vapor-deposited polymer film forming device 166 of the second inner vapor-deposited polymer film forming unit 156 cooperate with each other to constitute fourth vapor-deposited polymer film forming means, while the lithium salt introducing device 164 of the second outer vapor-deposited polymer film forming unit 154 and the lithium salt introducing device 168 of the second inner vapor-deposited polymer film forming unit 156 cooperate with each other to constitute second lithium salt introducing means.

The material reservoirs 120a, 120b and 120c of the vapor-deposited polymer film forming device 162 of the second outer vapor-deposited polymer film forming unit 154 accommodate the same three materials 124a, 124b and 124c as accommodated in the material reservoirs 120a, 120b, 120c of the vapor-deposited polymer film forming device 110 of the first outer vapor-deposited polymer film forming unit 72, while the material reservoirs 120a, 120b and 120c of the vapor-deposited polymer film forming device 166 of the second inner vapor-deposited polymer film forming unit 156 accommodate the same three materials 124a, 124b and 124c as accommodated in the material reservoirs 120a, 120b, 120c of the vapor-deposited polymer film forming device 146 of the first inner vapor-deposited polymer film forming unit 74. The powder reservoirs 134 of the lithium salt introducing devices 164, 168 of the second outer and inner vapor-deposited polymer film forming units 154, 156 accommodate the same lithium-ion conductivity rendering substance 144 as accommodated in the powder reservoirs 134 of the lithium salt introducing devices 112, 148 of the first outer and inner vapor-deposited polymer film forming units 72, 74.

The battery cell producing unit 62 has a pair of laminating rollers 170, and a take-up roller 172. The two laminating rollers 170 are held in rolling contact with each other at their outer circumferential surfaces, such that the laminating rollers 170 are rotatable in the respective opposite directions. The first laminar member 40 formed by the first laminar member producing unit 58 and fed from the first feeding roller 68, and the second laminar member 42 formed by the second laminar member producing unit 60 and fed from the second feeding roller 150 are fed through a nip between the two laminating rollers 170, so that the first and second laminar members 40, 42 are superposed or laminated on each other. These first and second laminar members 40, 42 superposed on each other are wound on the take-up roller 172.

The desired lithium-ion secondary battery 10 is produced by the thus constructed production apparatus 46, in the following manner.

Initially, the roll of the aluminum foil strip 64 is installed on the first supply roller 54, while the roll of the copper foil strip 66 is installed on the second supply roller 56. Then, the leading end portions of the aluminum foil strip 64 and the copper foil strip 66 extending from the respective first and second supply rollers 54, 56 are partially wound on the respective first and second feeding rollers 68, 150, and passed through the nip between the two laminating rollers 170 such that these leading end portions are superposed on each other. Then, the aluminum and copper foil strips 64, 66 are fixed at their leading ends to the take-up roller 172 so that the mutually superposed aluminum and copper foil strips 64, 66 are wound on the take-up roller 172. These steps are implemented as a preparatory operation for production of the lithium-ion secondary battery 10.

After the preparatory operation, the vacuum pump 52 is operated to evacuate the vacuum chamber 48 to a pressure of about 10⁻⁴-100Pa.

Subsequently, the first feeding roller 68, the second feeding roller 150 and the take-up roller 172 are rotated to continuously and concurrently feed the respective aluminum foil strip 64 and copper foil strip 66 from the respective first and second supply rollers 54, 56 toward the take-up roller 172 such that the aluminum and copper foil strips 64, 66 are held in contact with the outer circumferential surfaces of the respective first and second feeding rollers 68, 150 being rotated.

Upon initiation of the feeding movements of the aluminum and copper foil strips 64, 66 by the respective first and second feeding rollers 68, 150, the first and second laminar member producing units 58, 60 are operated to initiate concurrent production of the first and second laminar members 40, 42. As described above, the first and second laminar members 40, 42 are produced in substantially the same process. The following description refers to the method of producing the first laminar member 40, by way of example, and the detailed description of the method of producing the second laminar member 42 will be omitted.

Namely, upon initiation of the feeding movement of the aluminum foil strip 64 by the first feeding roller 68, the mixture of the vapors of the two materials 90a, 90b generated in the first and second vapor sources 82, 84 of the vapor-deposited polymer film forming device 78 of the positive electrode layer forming unit 70, and the positive electrode active substance 24 fed from the positive electrode active substance introducing device 80 into the vapor supply pipe 92 together with the carrier gas is blown from the outlet open end of the vapor supply pipe 92 onto the aluminum foil strip 64, at the predetermined circumferential position of the first feeding roller 68. As a result, the two materials (monomers) 90a, 90b are polymerized into the positive-electrode vapor-deposited polymer film 26 (more precisely, a portion of the vapor-deposited polymer film 26 other than the positive electrode active substance 24) formed of polyurea on the positive electrode collector layer 12 formed of the aluminum foil strip 64, while at the same time the positive electrode active substance 24 is introduced into the vapor-deposited polymer film 26.

Then, the positive-electrode vapor-deposited polymer film 26 is irradiated with the ultraviolet radiation generated from the ultraviolet irradiating device 81, so that the polyurea constituting the vapor-deposited polymer film 26 is transformed into polyaniline. Thus, the positive electrode layer 16 formed of the vapor-deposited polymer film 26 of polyaniline containing the positive electrode active substance 24 is laminated integrally on the positive electrode collector layer 12 formed of the aluminum foil strip 64.

Subsequently, the mixture of the vapors of the three materials 124a, 124b, 124c generated in the first, second and third vapor sources 114, 116, 118, and the lithium-ion conductivity rendering substance 144 fed from the lithium salt introducing device 112 into the vapor supply pipe 126 together with the carrier gas is blown from the outlet open end of the vapor supply pipe 126 onto the positive electrode layer 16 formed on the aluminum foil strip 64 moving in contact with the first feeding roller 68.

As a result, the three materials (monomers) 124a, 124b, 124c are polymerized into the first outer vapor-deposited polymer film 37 (more precisely, a portion of the polymer film 37 other than the lithium-ion conductivity rendering substance 144) formed of polyurea having the repeating unit structure of polyethylene oxide and the functional group containing an element of high electronegativity, on the positive electrode layer 16 formed on the aluminum foil strip 64, while at the same time the lithium-ion conductivity rendering substance 144 is introduced into the first outer vapor-deposited polymer film 37. Thus, the first outer vapor-deposited polymer film 37 formed of polyurea having the lithium-ion conductivity and the functional group containing the element of high electronegativity is laminated integrally on the positive electrode layer 16 laminated on the positive electrode collector layer 12 formed of the aluminum foil strip 64.

Then, the mixture of the vapors of the three materials 124a, 124b, 124c generated in the first, second and third vapor sources 114, 116, 118, and the lithium-ion conductivity rendering substance 144 fed from the lithium salt introducing device 148 into the vapor supply pipe 126 together with the carrier gas is blown from the outlet open end of the vapor supply pipe 126 onto the first outer vapor-deposited polymer film 37 formed on the positive electrode layer 16 formed on the aluminum foil strip 64 moving in contact with the first feeding roller 68.

As a result, the three materials (monomers) 124a, 124b, 124c are polymerized into the first inner vapor-deposited polymer film 36 (more precisely, a portion of the polymer film 36 other than the lithium-ion conductivity rendering substance 144) formed of polyurea having the repeating unit structure of polyethylene oxide, on the first outer vapor-deposited polymer film 37, while at the same time the lithium-ion conductivity rendering substance 144 is introduced into the first inner vapor-deposited polymer film 36. Thus, the first inner vapor-deposited polymer film 36 formed of polyurea having the lithium-ion conductivity is laminated integrally on the first outer vapor-deposited polymer film 37 formed on the positive electrode layer 16 formed on the aluminum foil strip 64.

As described above, the positive electrode layer 16, and the first outer and inner vapor-deposited polymer films 37, 36 constituting the first solid electrolyte layer portion 32 are continuously laminated on each other in this order of description on the positive electrode collector layer 12 formed of the aluminum foil strip 64, to form the first laminar member 40. The thus formed first laminar member 40 is continuously fed from the first feeding roller 68 toward the battery cell producing unit 62.

While the first laminar member 40 is continuously produced by the first laminar member producing unit 58 in the manner as described above, the second laminar member 42 is continuously produced by the second laminar member producing unit 60 in substantially the same manner. The produced second laminar member 42 is continuously fed from the second feeding roller 150 toward the battery cell producing unit 62.

Subsequently, the first and second laminar members 40, 42 fed toward the battery cell producing unit 62 are passed through the nip between the pair of laminating rollers 170, so that the two laminar members 40, 42 are superposed or laminated on each other, with the first and second inner vapor-deposited polymer films 36, 38 being held in contact with each other.

Thus, the battery cell 22 is formed as a laminar body consisting of the positive electrode collector layer 12, the positive electrode layer 16, the solid electrolyte layer 20 consisting of the first and second solid electrolyte layer portions 32, 34, the negative electrode layer 18 and the negative electrode collector layer 14, which are laminated on each other in this order of description, as shown in Fig. 1. This battery cell 22 constitutes the desired lithium-ion secondary battery 10 in the form of a tape wherein the first and second solid electrolyte layer portions 32, 34 define the laminate interface 44 therebetween in the middle of the solid electrolyte layer 20 as seen in the thickness direction. The tape of the lithium-ion secondary battery 10 is wound as a roll on the take-up roller 172.

The thus produced lithium-ion secondary battery 10 is fed from the roll on the take-up roller 172, and is cut into pieces each of which is provided with terminals connected to the positive and negative electrode collector layers 12, 14, as needed, and covered entirely by a suitable protective film before each piece of the lithium-ion secondary battery is used.

It will be understood from the foregoing description of the present embodiment that a step of producing the first and second laminar members 40, 42, and a step of superposing these first and second laminar members 40, 42 to produce the battery cell 22 are continuously performed as a series of operations within the vacuum chamber 48, for continuously producing the desired lithium-ion secondary battery 10 in a roll-to-roll transferring fashion, so that the productivity of the lithium-ion secondary battery 10 can be significantly and effectively improved.

The present embodiment is further configured such that the positive and negative electrode layers 16, 18 and the solid electrolyte layer 20 are constituted by the positive-electrode and negative-electrode vapor-deposited polymer films 26, 30 respectively containing the active substances 24, 28, the first inner and outer vapor-deposited polymer films 36, 37, and the second inner and outer vapor-deposited polymer films 38, 39, which are formed of polyaniline or polyurea having a high degree of flexibility or plasticity, so that the lithium-ion secondary battery 10 as a whole exhibits an adequate degree of flexibility or plasticity, and an accordingly high degree of bending or flexural strength. Accordingly, the lithium-ion secondary battery 10 has an effectively improved ease of handling.

The present embodiment is also configured such that the positive and negative electrode layers 16, 18 and the solid electrolyte layer 20 are formed by the vapor-deposition polymerization process, so that each of the positive electrode layer 16, first solid electrolyte layer portion 32, negative electrode layer 18 and second solid electrolyte layer portion 34 can be formed with a sufficiently small thickness with a high degree of uniformity, over the entire surface areas of the positive and negative electrode collector layers 12, 14, even where the surfaces of these collector layers 12, 14 are not sufficiently flat with local recessed and raised portions being formed therein or thereon, for instance. Therefore, irrespective of the condition of the surfaces of the positive and negative electrode collector layers 12, 14 (on which the positive and negative electrode layers 16, 18 are formed), the lithium-ion secondary battery 10 can be consistently and stably produced so as to assure a high degree of stability of its cell performance, with effective reduction of its size and significant improvement of its output density and freedom of its shape.

Further, the vapor-deposition polymerization process employed to form the positive and negative electrode layers 16, 18 and the solid electrolyte layer 20 eliminates the use of a device for drying the positive and negative electrode layers 16, 18 and the solid electrolyte layer 20 after these layers are formed, and makes it possible to accordingly simplify the required production apparatus and to reduce its size, resulting in an advantageous reduction of the running cost of the production apparatus. In addition, the elimination of the drying step and the vapor-deposition polymerization process which permits a sufficiently high rate of film formation make it possible to extremely effectively reduce the required cycle time of production of the lithium-ion secondary battery 10, so that the desired lithium-ion secondary battery 10 can be efficiently produced at a sufficiently reduced cost according to the present embodiment.

In the lithium-ion secondary battery 10 according to this embodiment, the positive electrode layer 16 and the first solid electrolyte layer portion 32 are laminated integrally on the surface of the positive electrode collector layer 12 by the vapor-deposition polymerization process, while the negative electrode layer 18 and the second solid electrolyte layer portion 34 are laminated integrally on the surface of the negative electrode collector layer 14 by the vapor-deposition polymerization process. Then, only the first and second solid electrolyte layer portions 32, 34 are superposed on each other so as to define the laminate interface 44 therebetween.

Accordingly, the present lithium-ion secondary battery 10 does not have gaps preventing movements of lithium ion during its charging and discharging, between the positive electrode collector layer 12 and the positive electrode layer 16, between the positive electrode layer 16 and the first solid electrolyte layer portion 32, between the negative electrode collector layer 14 and the negative electrode layer 18, and between the negative electrode layer 18 and the second solid electrolyte layer portion 34. As a result, the interface resistance at the boundary between the solid electrolyte layer 20 and the positive and negative electrode layers 16, 18 is effectively lowered, so that the cell performance can be extremely effectively improved.

It is noted that during charging and discharging of the lithium-ion secondary battery 10, substantially no movements of lithium ions take place in the intermediate portion of the solid electrolyte layer 20 as seen in its thickness direction, so that the laminate interface 44 preventing the movements of lithium ions in the intermediate portion of the solid electrolyte layer 20 does not result in reduction of the cell performance.

Further, the present lithium-ion secondary battery 10 is configured such that the first outer vapor-deposited polymer film 37 constituting a portion of the first solid electrolyte layer portion 32 on the side of the positive electrode layer 16, and the second outer vapor-deposited polymer film 39 constituting a portion of the second solid electrolyte layer portion 34 on the side of the negative electrode layer 18 are formed of polyurea having the functional group including an element of high electronegativity, so that lithium ions are unevenly distributed within the solid electrolyte layer 20 such that the lithium ions exist with a higher density in the outer portions of the solid electrolyte layer 20 on the side of the positive and negative electrode layers 16, 18, whereby the cell performance is further improved.

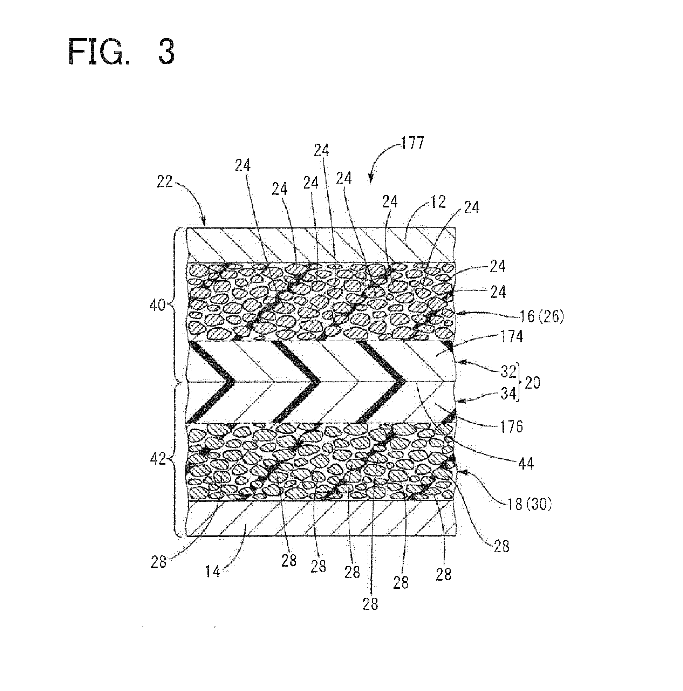

Referring next to Fig. 3, there is shown a lithium-ion secondary battery 177 according to a second embodiment of this invention, wherein the first solid electrolyte layer portion 32 of the solid electrolyte layer 20 consists of a positive-electrode-side vapor-deposited polymer film 174 of a single-layer structure formed on the positive electrode layer 16 by the vapor-deposition polymerization process, while the second solid electrolyte layer portion 34 of the solid electrolyte layer 20 consists of a negative-electrode-side vapor-deposited polymer film 176 of a single-layer structure formed on the negative electrode layer 18 by the vapor-deposition polymerization process.

In this second embodiment wherein each of the first and second solid electrolyte layer portions 32, 34 has a single-layer structure, it is preferred that lithium ions unevenly exist, with a higher density in a portion of the positive-electrode-side vapor-deposited polymer film 174 on the side of the positive electrode layer 16 while anions unevenly exist, with a higher density in the other portion of the vapor-deposited polymer film 174 remote from the positive electrode layer 16, and that lithium ions unevenly exist, with a higher density in a portion of the negative-electrode-side vapor-deposited polymer film 176 on the side of the negative electrode layer 18 while anions unevenly exist, with a higher density in the other portion of the vapor-deposited polymer film 176 remote from the negative electrode layer 18.

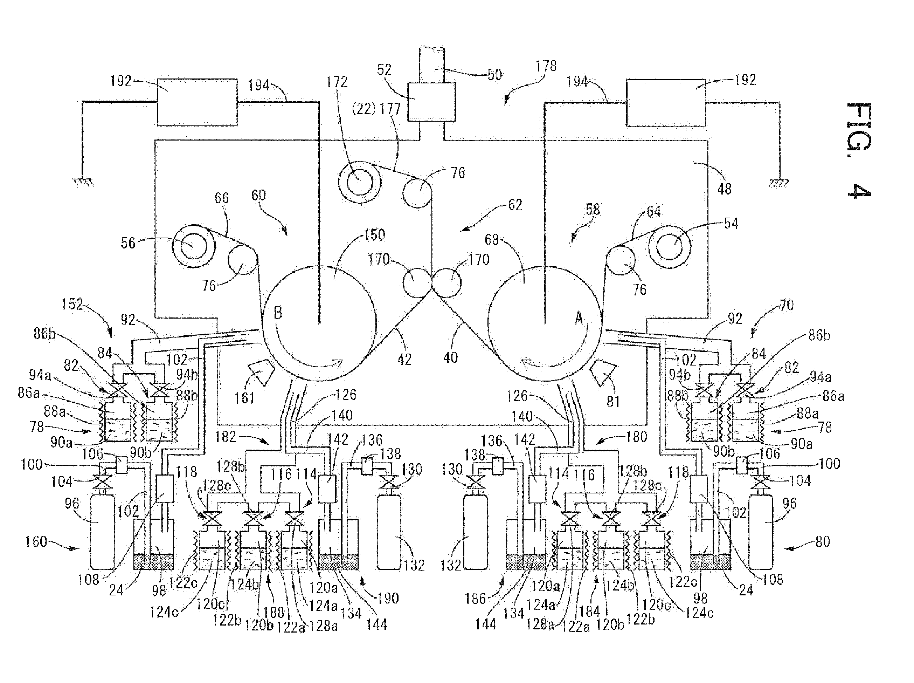

For example, the lithium-ion secondary battery 177 having the solid electrolyte layer 20 constructed as descried above is produced by a production apparatus 178 constructed as shown in Fig. 4, in the following manner. It is noted that the reference signs used in Figs. 1 and 2 to denote the members and portions in the first embodiment are used in Figs. 3-8 showing the second and other embodiments, to denote the corresponding members and portions, which will not be described redundantly.

In the production apparatus 178 constructed according to the present second embodiment, the first laminar member producing unit 58 has the first feeding roller 68, the positive electrode layer forming unit 70, and a positive-electrode-side vapor-deposited polymer film forming unit 180, while the second laminar member producing unit 60 has the second feeding roller 150, the negative electrode layer forming unit 152, and a negative-electrode-side vapor-deposited polymer film forming unit 182. The first and second feeding rollers 68, 150 and the positive and negative electrode layer forming units 70, 152 of the first and second laminar member producing units 58, 60 are identical in construction with those provided in the production apparatus 46 according to the first embodiment described above.

The positive-electrode-side and negative-electrode-side vapor-deposited polymer film forming units 180, 182 are identical in construction with the first and second outer vapor-deposited polymer film forming units 72, 154 of the first and second laminar member producing units 58, 60 provided in the production apparatus 46 of the first embodiment. Namely, the first and second laminar member producing units 58,60 provided in the present production apparatus 178 is not provided with the first and second inner vapor-deposited polymer film forming units 74, 156 provided in the production apparatus 46 of the first embodiment.

Described more specifically, the positive-electrode-side vapor-deposited polymer film forming unit 180 has a vapor-deposited polymer film forming device 184 and a lithium salt introducing device 186, while the negative-electrode-side vapor-deposited polymer film forming unit 182 has a vapor-deposited polymer film forming device 188 and a lithium salt introducing device 190. The vapor-deposited polymer film forming device 184 and the lithium salt introducing device 186 of the positive-electrode-side vapor-deposited polymer film forming unit 180 are identical in construction with the vapor-deposited polymer film forming device 110 and the lithium salt introducing device 112 of the first outer vapor-deposited polymer film forming unit 72, while the vapor-deposited polymer film forming device 188 and the lithium salt introducing device 190 of the negative-electrode-side vapor-deposited polymer film forming unit 182 are identical in construction with the vapor-deposited polymer film forming device 162 and the lithium salt introducing device 164 of the second outer vapor-deposited polymer film forming unit 154.

In this production apparatus 178, electric power supply devices 192, 192 are connected to the respective first and second feeding rollers 68, 150 through respective power supply wires 194, 194, for applying negative voltages to the feeding rollers 68, 150.

The desired lithium-ion secondary battery 177 is produced by the thus constructed production apparatus 178, in the following manner. It is noted that the steps to be performed in this second embodiment which are identical with those to be performed to produce the lithium-ion secondary battery 10 by the production apparatus 46 of the first embodiment will not be described redundantly.

Initially, the preparatory operation for production of the lithium-ion secondary battery 177 is carried out. Namely, the leading end portions of the aluminum foil strip 64 and the copper foil strip 66 extending from the respective first and second supply rollers 54, 56 are partially wound on the respective first and second feeding rollers 68, 150, and are fixed at their leading ends to the take-up roller 172 so that the mutually superposed aluminum foil strip 64 and copper foil strip 66 are wound on the take-up roller 172. Then, the vacuum chamber 48 is made into a vacuum state.

Then, the negative voltages are applied to the first and second feeding rollers 68, 150 from the respective electric power supply devices 192, 192. In this condition, the take-up roller 172 and the first and second feeding rollers 68, 150 are rotated to feed the aluminum and copper foil strips 64, 66 in contact with the outer circumferential surface of the feeding rollers 68, 150.

Subsequently, the positive and negative electrode layer forming units 70, 152 are operated to laminate the respective positive and negative electrode layers 16, 18 integrally on the respective aluminum and copper foil strips 64, 66 being fed in contact with the outer circumferential surfaces of the respective first and second feeding rollers 68, 150.

Then, the positive-electrode-side and negative-electrode-side vapor-deposited polymer film forming units 180, 182 are operated to laminate the respective positive-electrode-side and negative-electrode-side vapor-deposited polymer films 174, 176 integrally on the respective positive and negative electrode layers 16, 18, in the same manner as in the formation of the first and second outer vapor-deposited polymer films 37, 39 by the production apparatus 46 of the first embodiment. Thus, the first and second laminar members 40, 42 are continuously produced.

In this second embodiment wherein the negative voltages are applied from the electric power supply devices 192, 192 to the respective first and second feeding rollers 68, 150 during the production of the respective first and second laminar members 40, 42, the aluminum and copper foil strips 64, 66 being fed in contact with the first and second feeding rollers 68, 150 are positively charged on one of the opposite sides contacting those feeding rollers 68, 150, and negatively charged on the other side. Consequently, the positive and negative electrode layers 16, 18 formed on the respective aluminum and copper foil strips 64, 66 are similarly positively charged on one of the opposite sides contacting the foil strips 64, 66, and negatively charged on the other side. That is, the positive and negative electrode layers 16, 18 are negatively charged on the side contacting the positive-electrode-side and negative-electrode-side vapor-deposited polymer films 174, 176.

As a result, lithium ions derived from the lithium salt contained as the lithium-ion conductivity rendering substance 144 within the positive-electrode-side vapor-deposited polymer film 174 formed on the positive electrode layer 16 are moved toward the positive electrode layer 16 through the vapor-deposited polymer film 174, so that the lithium ions are unevenly distributed within the vapor-deposited polymer film 174 such that the lithium ions exist more densely in a thickness portion of the vapor-deposited polymer film 174 adjacent to the positive electrode layer 16. Further, anions derived from the lithium salt contained within the positive-electrode-side vapor-deposited polymer film 174 are moved away from the positive electrode layer 16 so that the anions are unevenly distributed within the vapor-deposited polymer film 174 such that the anions exist more densely in a thickness portion of the vapor-deposited polymer film 174 remote from the positive electrode layer 16. Namely, the local content of the anions in the thickness portion of the vapor-deposited polymer film 174 adjacent to the positive electrode layer 16 is sufficiently reduced.

On the other hand, lithium ions derived from the lithium salt contained as the lithium-ion conductivity rendering substance 144 within the negative-electrode-side vapor-deposited polymer film 176 formed on the negative electrode layer 18 are moved toward the negative electrode layer 18 through the vapor-deposited polymer film 176, so that the lithium ions are unevenly distributed within the vapor-deposited polymer film 176 such that the lithium ions exist more densely in a thickness portion of the vapor-deposited polymer film 176 adjacent to the negative electrode layer 18. Further, anions derived from the lithium salt contained within the negative-electrode-side vapor-deposited polymer film 176 are moved away from the negative electrode layer 18 so that the anions are unevenly distributed within the vapor-deposited polymer film 176 such that the anions exist more densely in a thickness portion of the vapor-deposited polymer film 176 remote from the negative electrode layer 18. Namely, the local content of the anions in the thickness portion of the vapor-deposited polymer film 176 adjacent to the negative electrode layer 18 is sufficiently reduced. It will be understood from the foregoing description of this second embodiment that the electric power supply device 192 and the power supply wire 194 for applying the negative voltage to the first feeding roller 68 cooperate with each other to constitute first unevenly distributing means for unevenly distributing the lithium ions and anions within the positive-electrode-side vapor-deposited polymer film 174, while the power supply device 192 and the power supply wire 194 for applying the negative voltage to the second feeding roller 150 cooperate with each other to constitute second unevenly distributing means for unevenly distributing the lithium ions and anions within the negative-electrode-side vapor-deposited polymer film 176.

The thus produced first and second laminar members 40, 42 are superposed or laminated on each other by the pair of laminating rollers 170, 170 of the battery cell producing unit 62, and wound on the take-up roller 172, as a roll of the desired lithium-ion secondary battery 177.

The present second embodiment has substantially the same operational and physical advantages as the first embodiment described above.

In particular, not only the local content of the lithium ions in the first solid electrolyte layer portion 32 in the form of the positive-electrode-side vapor-deposited polymer film 174 is made higher in its thickness portion adjacent to the positive electrode layer 16, but also the local content of the anions is made sufficiently low in that thickness portion. Further, not only the local content of the lithium ions in the second solid electrolyte layer portion 34 in the form of the negative-electrode-side vapor-deposited polymer film 176 is made higher in its thickness portion adjacent to the negative electrode layer 18, but also the local content of the anions is made sufficiently low in that thickness portion. Accordingly, it is possible to effectively prevent the anions from disturbing the movements of the lithium ions between the positive electrode active substance 24 in the positive electrode layer 16 and the first solid electrolyte layer portion 32, and between the negative electrode active substance 28 in the negative electrode layer 18 and the second solid electrolyte layer portion 34, whereby the cell performance can be further improved in an effective way.

The present embodiment is further advantageous in that the lithium ions unevenly exist, with a higher density in the thickness portion of the first solid electrolyte layer portion 32 adjacent to the positive electrode layer 16 and in the thickness portion of the second solid electrolyte layer portion 34 adjacent to the negative electrode layer 18, even though each of these first and second solid electrolyte layer portions 32, 34 has a single-layer structure. Thus, the cell performance can be effectively improved, with a simple construction of the first and second solid electrolyte layer portions 32, 34 each having the single-layer structure. In addition, the single-layer structure of the solid electrolyte layer portions 32, 34 permits effective constructional simplification of the production apparatus 178.

As previously described, the first and second solid electrolyte layer portions 32, 34 are formed of the "resin A" which has a repeating unit structure of polyethylene oxide, which contains a lithium salt in polyethylene oxide, and which can be formed into a film by a vapor-deposition polymerization process, or the "resin B" which contains a lithium salt, a side chain of which is bonded to a sulfonic acid group, and which can be formed into a film by a vapor-deposition polymerization process. Therefore, the first and second solid electrolyte layer portions 32, 34 can be formed by the production apparatus 178 in the following manner. These first and second solid electrolyte layer portions 32, 34 can be formed in the same process by the first and second laminar member producing units 58, 60 which are identical in construction with each other. For this reason, the formation of only the first solid electrolyte layer portion 32 will be described.

In the case of formation of the first solid electrolyte layer portion 32 of polyurea in the form of the resin A, for example, the material reservoirs 120a and 120b of the first and second vapor sources 114, 116 of the vapor-deposited polymer film forming device 184 of the positive-electrode-side vapor-deposited polymer film forming unit 180 respectively accommodate the material 124a consisting of ethylene glycol diamine such as diethylene glycol bis(3-aminopropyl) ether, and the material 124b consisting of aromatic diisocyanate such as m-xylylene diisocyanate, at least one of which has a side chain bonded to the repeating unit structure of polyethylene oxide. In this case, the third vapor source 118 is not used.

The vapors of the materials 124a, 124b generated in the respective first and second vapor sources 114, 116 are polymerized on the positive electrode layer 16 formed on the aluminum foil strip 64 being moved in contact with the outer circumferential surface of the first feeding roller 68 within the vacuum chamber 48, to form the positive-electrode-side vapor-deposited polymer film 174, while at the same time the powdered lithium-ion conductivity rendering substance 144 consisting of a lithium salt is introduced by the lithium salt introducing device 186 into the vapor-deposited polymer film 174. Thus, the positive-electrode-side vapor-deposited polymer film 174 having the repeating unit structure of polyethylene oxide and containing the lithium salt in polyethylene oxide is formed on the positive electrode layer 16 formed on the aluminum foil strip 64, whereby the first solid electrolyte layer portion 32 is laminated integrally on the positive electrode layer 16.

In the case of formation of the first solid electrolyte layer portion 32 of polyurea in the form of the resin B, for example, the material reservoirs 120a and 120b of the first and second vapor sources 114, 116 of the vapor-deposited polymer film forming device 184 of the positive-electrode-side vapor-deposited polymer film forming unit 180 respectively accommodate the material 124a consisting of ethylene glycol diamine such as diethylene glycol bis(3-aminopropyl) ether, and the material 124b consisting of aromatic diisocyanate such as m-xylylene diisocyanate, at least one of which has a side chain bonded to a sulfonic acid group. In this case, the third vapor source 118 is not used, either.

The vapors of the materials 124a, 124b generated in the respective first and second vapor sources 114, 116 are polymerized on the positive electrode layer 16 formed on the aluminum foil strip 64 being moved in contact with the outer circumferential surface of the first feeding roller 68 within the vacuum chamber 48, to form the positive-electrode-side vapor-deposited polymer film 174, while at the same time the powdered lithium-ion conductivity rendering substance 144 consisting of a lithium salt is introduced by the lithium salt introducing device 186 into the vapor-deposited polymer film 174. Thus, the positive-electrode-side vapor-deposited polymer film 174 containing the lithium salt and having a side chain bonded to a sulfonic acid group is formed on the positive electrode layer 16, whereby the first solid electrolyte layer portion 32 is laminated integrally on the positive electrode layer 16.

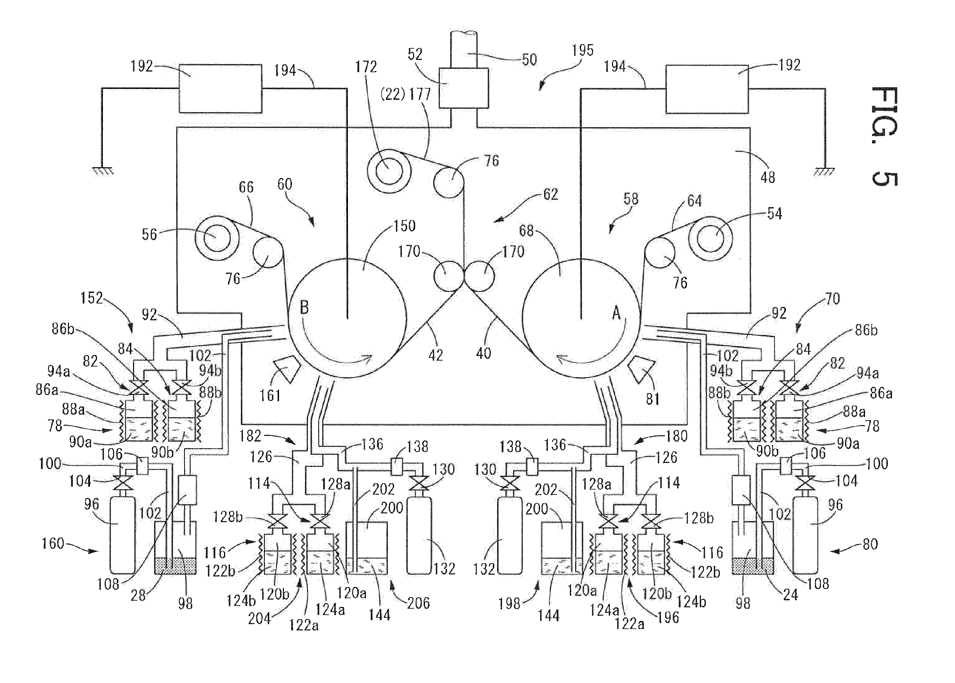

By the way, the kind of the lithium-ion conductivity rendering substance 144 is not particularly limited, provided this substance 144 can literally render lithium-ion conductivity to the first and second solid electrolyte layer portions 32, 34 (solid electrolyte layer 20), when the substance 144 is contained in these solid electrolyte layer portions 32, 34. Hence, it is possible to use, as the lithium-ion conductivity rendering substance 144, an ion-conductive polymer in which a lithium salt is dissolved. Where this ion-conductive polymer is used, the desired lithium-ion secondary battery 177 can be produced by a production apparatus 195 constructed as shown in Fig. 5 according to a third embodiment of this invention, for example.

As shown in Fig. 5, the production apparatus 195 is identical in construction with the production apparatus 178 of the second embodiment shown in Fig. 4, except in the construction of the positive-electrode-side and negative-electrode-side vapor-deposited polymer film forming units 180, 182. Since these vapor-deposited polymer film forming units 180, 182 are identical in construction with each other, only the positive-electrode-side vapor-deposited polymer film forming unit 180 will be described in connection with the production apparatus 195.

Namely, the positive-electrode-side vapor-deposited polymer film forming unit 180 of the production apparatus 195 has a vapor-deposited polymer film forming device 196 which is not provided with the third vapor source (118). The material reservoirs 120a, 120b of the first and second vapor sources 114, 116 of the vapor-deposited polymer film forming device 196 respectively accommodate, as the materials 124a, 124b, polyurea monomers for the positive-electrode-side vapor-deposited polymer film 174, in the form of ethylene glycol diamine such as diethylene glycol bis(3-aminopropyl) ether, and aromatic diisocyanate such as m-xylylene diisocyanate, for example, in a liquid state.

The production apparatus 195 has a lithium salt introducing device 198 including the gas cylinder 132 provided with the shut-off valve 130, the gas supply pipe 136, the mass flow controller 138, a liquid reservoir 200, and a liquid supply pipe 202. The liquid reservoir 200 of the lithium salt introducing device 198 accommodates the lithium-ion conductivity rendering substance 144 consisting of an ion-conductive polymer in a liquid state at the ambient temperature, in which a lithium salt is dissolved. In the third embodiment, oligo-ethylene oxide in which a lithium salt [LiN(SO₂CF₃)₂, for example] is dissolved and which has a low molecular weight of about not more than 700 is used as the lithium-ion conductivity rendering substance 144.

The liquid supply pipe 202 has an outlet end portion inserted into the gas supply pipe 136, which has an outlet end portion which is inserted into and located within the vapor supply pipe 126 of the vapor-deposited polymer film forming device 196, so that the outlet end portion of the gas supply pipe 136 is open toward the outer circumferential surface of the first feeding roller 68, through the outlet end portion of the vapor supply pipe 126.

In the thus constructed lithium salt introducing device 198, the carrier gas is fed from the gas cylinder 132 through the gas supply pipe 136, in the open state of the shut-off valve 130, while the lithium-ion conductivity rendering substance 144 accommodated in a liquid state in the liquid reservoir 200 is sucked into the gas supply pipe 136 through the liquid supply pipe 202, under a reduced pressure generated within the gas supply pipe 136. Further, the liquid lithium-ion conductivity rendering substance 144 is dispersed in a mist state in the carrier gas within the gas supply pipe 136, and is fed into the outlet end portion of the vapor supply pipe 126, together with the carrier gas. Micro particles of the lithium-ion conductivity rendering substance 144 in the mist state are mixed with vapors of the two materials 124a, 124b in the outlet end portion of the vapor supply pipe 126, and a mixture of the particles of the substance 144, the vapors of the two materials 124a, 124b and the carrier gas is blown from the outlet open end of the vapor supply pipe 126, onto the aluminum foil strip 64 being moved in contact with the outer circumferential surface of the first feeding roller 68.

The negative-electrode-side vapor-deposited polymer film forming unit 182 also has a vapor-deposited polymer film forming device 204 and a lithium salt introducing device 206, which are identical in construction with the vapor-deposited polymer film forming device 196 and the lithium salt introducing device 198 of the positive-electrode-side vapor-deposited polymer film forming unit 180.

The desired lithium-ion secondary battery 177 is produced by the thus constructed production apparatus 195, in the following manner.

After the preparatory operation for production of the lithium-ion secondary battery 177, the steps of forming the positive and negative electrode layers 16, 18 on the aluminum and copper foil strips 64, 66 being moved in contact with the outer circumferential surface of the first and second feeding rollers 68, 150 are performed in the same manner as in the production of the lithium-ion secondary battery 177 by the production apparatus 178 of the second embodiment.

Then, the mixture of the vapors of the two materials 124a, 124b generated in the first and second vapor sources 114, 116, and the lithium-ion conductivity rendering substance 144 blown from the lithium salt introducing device 198 into the vapor supply pipe 126 together with the carrier gas is blown from the outlet open end of the vapor supply pipe 126 onto the positive electrode layer 16, so as to polymerize the two materials (monomers) 124a, 124b on the positive electrode layer 16, for thereby forming the positive-electrode-side vapor-deposited polymer film 174 of polyurea, while at the same time the lithium-ion conductivity rendering substance 144 is introduced into the vapor-deposited polymer film 174, whereby the first laminar member 40 is produced.

Concurrently, the negative-electrode-side vapor-deposited polymer film 176 is formed of polyurea, on the negative electrode layer 18, while at the same time the lithium-ion conductivity rendering substance 144 is introduced into the vapor-deposited polymer film 176. The step of forming the negative-electrode-side vapor-deposited polymer film 176 and the step of introducing the lithium-ion conductivity rendering substance 144 into the vapor-deposited polymer film 176 are performed in the same manner as the step of forming the positive-electrode-side vapor-deposited polymer film 174 and the step of introducing the lithium-ion conductivity rendering substance 144 into the vapor-deposited polymer film 174. Thus, the second laminar member 42 is produced.

The thus produced first and second laminar members 40, 42 are superposed or laminated on each other by the pair of laminating rollers 170, 170 of the battery cell producing unit 62, and wound on the take-up roller 172, as a roll of the desired lithium-ion secondary battery 177.

The present third embodiment has substantially the same operational and physical advantages as the first and second embodiments described above.

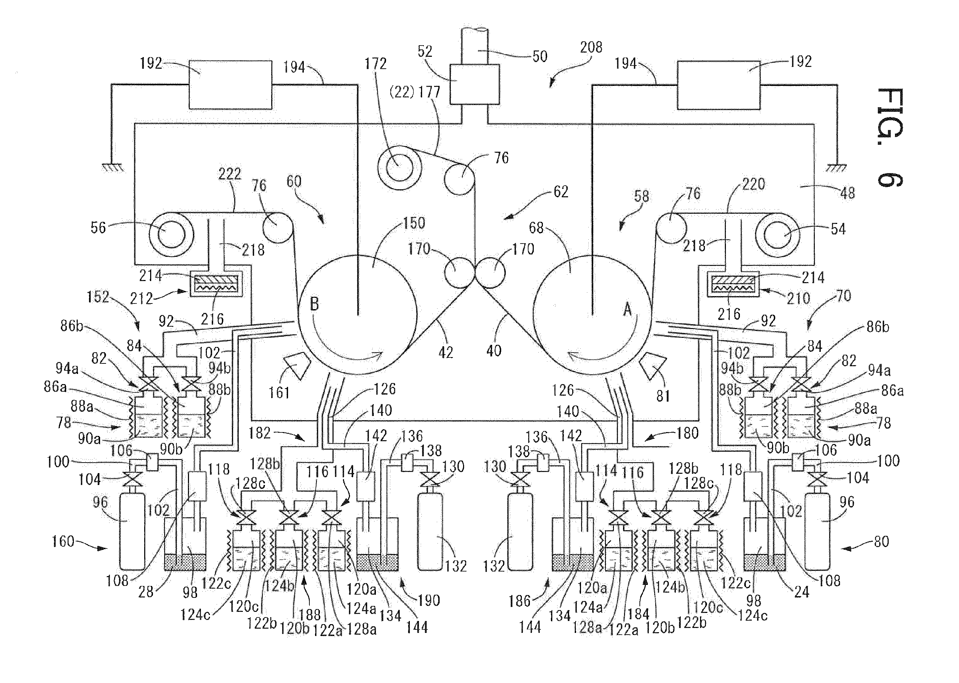

By the way, the positive electrode collector layer 12 and the negative electrode collector layer 14 may be constituted by vapor-deposited metal layers. The lithium-ion secondary battery 177 having the positive and negative electrode collector layers 12, 14 constituted by the vapor-deposited metal layers is produced by a production apparatus 208 constructed according to a fourth embodiment of this invention shown in Fig. 6, in the following manner.

Namely, the production apparatus 208 is provided with a positive electrode collector layer forming unit 210 and a negative electrode collector layer forming unit 212, which are disposed outside the vacuum chamber 48, as shown in Fig. 6. In the other aspects, the production apparatus 208 is identical in construction with the production apparatus 178 of the second embodiment shown in Fig. 4.

Described more specifically, the positive and negative electrode collector layer forming units 210 and 212 have the same known basic arrangement, each configured to form a vapor-deposited metal film by a vacuum vapor-deposition process, and having a heater 216 for heating and evaporating a suitable metallic vapor-deposition material 214, and a nozzle 218 through which a vapor of the metallic vapor-deposition material 214 generated by heating by the heater 216 is blown outside. In this embodiment, the metallic vapor-deposition material 214 used by the positive electrode collector layer forming unit 210 is an aluminum or aluminum alloy material (hereinafter referred to simply as "aluminum") while the metallic vapor-deposition material 214 used by the negative electrode collector layer forming unit 212 is a copper or copper alloy material (hereinafter referred to simply as "copper").

In the present production apparatus 208, a roll of a substrate in the form of a positive-electrode-side protective film 220 on which the positive electrode layer 16 is formed is installed on the first supply roller 54, while a roll of a substrate in the form of a negative-electrode-side protective film 222 on which the negative electrode layer 18 is formed is installed on the second supply roller 56. The positive-electrode-side protective film 220 extending from the first supply roller 54 is partially wound on the first feeding roller 68, from which the protective film 220 is fed toward the take-up roller 172. Similarly, the negative-electrode-side protective film 222 extending from the second supply roller 56 is partially wound on the second feeding roller 150, from which the protective film 222 is fed toward the take-up roller 172.

The positive-electrode-side and negative-electrode-side protective films 220, 222, which protect the lithium-ion secondary battery 177, are commonly used conventional protective films. For instance, each of these protective films 220, 222 is a laminar film consisting of a polyester resin layer, a polyamide resin layer, an aluminum layer and a polypropylene resin layer which are superposed on each other and bonded together with bonding layers consisting of low-molecular-weight polyethylene, for example.

The positive electrode collector layer forming unit 210 is located such that the nozzle 218 is open toward one surface of the positive-electrode-side protective film 220 extending from the first supply roller 54, at a position between the first supply roller 54 and the first feeding roller 68. Similarly, the negative electrode collector layer forming unit 212 is located such that the nozzle 218 is open toward one surface of the negative-electrode-side protective film 222 extending from the second supply roller 56, at a position between the second supply roller 56 and the second feeding roller 150.

In the arrangement described above, the positive electrode collector layer forming unit 210 blows the vapor of aluminum onto the above-indicated one surface of the positive-electrode-side protective film 220, at a position downstream of the first feeding roller 68, while the negative electrode collector layer forming unit 212 blows the vapor of copper onto the above-indicated one surface of the negative-electrode-side protective film 222, at a position downstream of the second feeding roller 150.

The desired lithium-ion secondary battery 177 is produced by the thus constructed production apparatus 208, in the following manner.

Initially, the preparatory operation for production of the lithium-ion secondary battery 177 is carried out by extending the leading end portions of the positive-electrode-side and negative-electrode-side protective films 220, 222 from the rolls of these protective films 220, 222 installed on the respective first and second supply rollers 54, 56. At the same time, the vacuum chamber 48 is evacuated by an operation of the vacuum pump 52.

Then, the first feeding roller 68 and the take-up roller 172 are rotated to continuously feed the positive-electrode-side protective film 220 from its roll, in contact with the outer circumferential surface of the first feeding roller 68 being rotated in the clockwise direction indicated in Fig. 6 by the arrow A, toward the take-up roller 172.

Subsequently, the vapor of aluminum is blown from the nozzle 218 into the vacuum chamber 48 so that the vapor is deposited on a portion of the above-indicated one surface of the positive-electrode-side protective film 220, which portion is opposed to the nozzle 218. The above-indicated one surface of the protective film 220 is opposite to the surface which comes into contact with the outer circumferential surface of the first feeding roller 68. As a result, the positive electrode collector layer 12 consisting of the vapor-deposited aluminum layer is continuously formed on the above-indicated one surface of the protective film 220 while the protective film 220 is fed from the first supply roller 54.

Concurrently with the formation of the positive electrode collector layer 12, the negative electrode collector layer 14 consisting of the vapor-deposited copper layer is continuously formed on the above-indicated one surface of the negative-electrode-side protective film 222, which one surface is opposite to the surface which comes into contact with the outer circumferential surface of the second feeding roller 150. The manner of formation of the negative electrode collector layer 14 by the negative electrode collector layer forming unit 212 is the same as that of formation of the positive electrode collector layer 12 by the positive electrode collector layer forming unit 210.

Then, the positive electrode layer 16 and the first solid electrolyte layer portion 32 are laminated in this order of description integrally on the positive electrode collector layer 12 formed on the positive-electrode-side protective film 220. Concurrently, the negative electrode layer 18 and the second solid electrolyte layer portion 34 are laminated in this order of description integrally on the negative electrode collector layer 14 formed on the negative-electrode-side protective film 222. Thus, the first laminar member 40 and the second laminar member 42 are concurrently produced. The formation of the positive electrode layer 16 and first solid electrolyte layer portion 32 on the positive electrode collector layer 12, and the formation of the negative electrode layer 18 and second solid electrolyte layer portion 34 on the negative electrode collector layer 14 are implemented by the positive and negative electrode layer forming units 70, 152 and the positive-electrode-side and negative-electrode-side vapor-deposited polymer film forming units 180, 182, in the same manner as in the second embodiment in which the lithium-ion secondary battery 177 is produced by the production apparatus 178.

Subsequently, the first and second laminar members 40, 42 are superposed or laminated on each other by the pair of laminating rollers 170, 170, and are wound on the take-up roller 172, to obtain a roll of the lithium-ion secondary battery 177. The thus produced lithium-ion secondary battery 177 is fed from the roll on the take-up roller 172, and is cut into pieces each of which is provided with terminals connected to the positive and negative electrode collector layers 12, 14, as needed, and the first and second electrolyte layer portions 32, 34 are bonded together by a thermal bonding process before each piece of the lithium-ion secondary battery is used.

The present fourth embodiment has substantially the same operational and physical advantages as the first through third embodiments described above.

In particular, the present fourth embodiment is advantageous in that the positive and negative electrode collector layers 12, 14 are constituted by the vapor-deposited metal layers formed by the vacuum vapor-deposition process. The thickness of the positive and negative electrode collector layers 12, 14 formed by the vacuum vapor-deposition process can be easily adjusted as needed, by adjusting the pressure of the vapors of aluminum and copper generated in the positive and negative electrode collector layer forming units 210, 212, contrary to the constant thickness of the collector layers 12, 14 formed of the metal foils.

The present embodiment is further advantageous in that the production of the lithium-ion secondary battery 177 consisting of the battery cell 22 including the positive electrode collector layer 12, positive electrode layer 16, solid electrolyte layer 20, negative electrode layer 18 and negative electrode collector layer 14, and the formation of the positive-electrode-side and negative-electrode-side protective films 220, 222 so as to cover the lithium-ion secondary battery 177 are continuously carried out in the roll-to-roll transferring fashion in one vacuum chamber 48, so that the lithium-ion secondary battery 177 covered by the protective films 220, 222 can be easily produced with a higher degree of productivity.

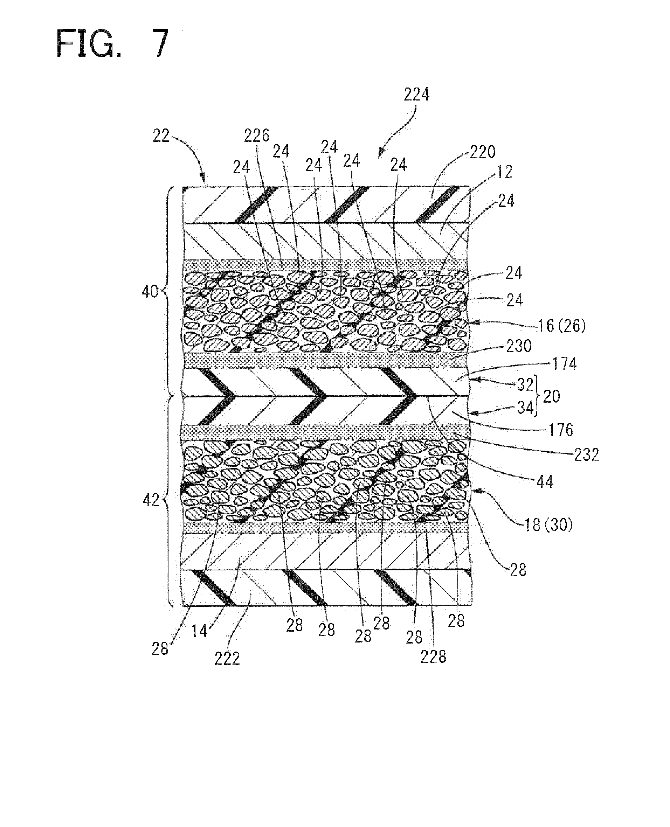

Referring next to the fragmentary longitudinal cross sectional view of Fig. 7, there is shown a lithium-ion secondary battery 224 according to a fifth embodiment of the present invention. As shown in Fig. 7, the lithium-ion secondary battery 224 according to the present embodiment has the positive electrode collector layer 12 formed integrally on the positive-electrode-side protective film 220, and the negative electrode collector layer 14 formed integrally on the negative-electrode-side protective film 222. The lithium-ion secondary battery 224 further has a first mixture layer 226 interposed between the positive electrode collector layer 12 and the positive electrode layer 16, and a second mixture layer 228 interposed between the negative electrode collector layer 14 and the negative electrode layer 18. The positive and negative electrode collector layers 12 and 14 are formed by a known vacuum vapor-deposition process. The positive electrode collector layer 12 is constituted by a vapor-deposited aluminum film, while the negative electrode collector layer 14 is constituted by a vapor-deposited copper film. The positive electrode layer 16 is constituted by the positive-electrode vapor-deposited polymer film 26 of polyurethane containing the positive electrode active substance 24, while the negative electrode layer 18 is constituted by the vapor-deposited polymer film 30 of polyurethane containing the negative electrode active substance 28.

The first mixture layer 226 is formed of a mixture of aluminum used to form the positive electrode collector layer 12, and polyurethane used to form the positive electrode layer 16. The first mixture layer 226 contains the positive electrode active substance 24, as needed. The second mixture layer 228 is formed of a mixture of copper used to form the negative electrode collector layer 14, and polyurethane used to form the negative electrode layer 18. The second mixture layer 228 contains the negative electrode active substance 28, as needed. The first and second mixture layers 226, 228 are electrically conductive.

In the first mixture layer 226, the content of aluminum gradually decreases in the direction from the positive electrode collector layer 12 toward the positive electrode layer 16, while the content of polyurethane gradually increases in the direction from the positive electrode collector layer 12 toward the positive electrode layer 16. In the second mixture layer 228, the content of copper gradually decreases in the direction from the negative electrode collector layer 14 toward the negative electrode layer 18, while the content of polyurethane gradually increases in the direction from the negative electrode collector layer 14 toward the negative electrode layer 18. Namely, the contents of aluminum and polyurethane in the first mixture layer 226, and the contents of copper and polyurethane in the second mixture layer 228 change linearly in the directions from the positive and negative electrode collector layers 12, 14 toward the positive and negative electrode layers 16, 18.

The lithium-ion secondary battery 224 further has a third mixture layer 230 interposed between the positive electrode layer 16 and the first solid electrolyte layer portion 32, and a fourth mixture layer 232 interposed between the negative electrode layer 18 and the second solid electrolyte layer portion 34. The first solid electrolyte layer portion 32 is constituted by the positive-electrode-side vapor-deposited polymer film 174 of polyurea having a repeating unit structure of polyethylene oxide and containing a lithium salt in polyethylene oxide, while the second solid electrolyte layer portion 34 is constituted by the negative-electrode-side vapor-deposited polymer film 176 of polyurea having a repeating unit structure of polyethylene oxide and containing a lithium salt in polyethylene oxide.

The third mixture layer 230 is formed of a mixture of a first polymer in the form of polyurethane which forms the positive electrode layer 16 (positive-electrode vapor-deposited polymer film 26 containing the positive electrode active substance 24), and a second polymer in the form of polyurea which forms the first solid electrolyte layer portion 32 (positive-electrode-side vapor-deposited polymer film 174). The fourth mixture layer 232 is formed of a mixture of a third polymer in the form of polyurethane which forms the negative electrode layer 18 (vapor-deposited polymer film 30 containing the negative electrode active substance 28), and a fourth polymer in the form of polyurea which forms the second solid electrolyte layer portion 34 (negative-electrode-side vapor-deposited polymer film 176). The third and fourth mixture layers 230, 232 contain the lithium-ion conductivity rendering substance 144, as needed, and are electrically conductive.

In the third mixture layer 230, the content of polyurethane gradually decreases in the direction from the positive electrode layer 16 toward the first solid electrolyte layer portion 32, while the content of polyurea gradually increases in the direction from the positive electrode layer 16 toward the first solid electrolyte layer portion 32. In the fourth mixture layer 232, the content of polyurethane gradually decreases in the direction from the negative electrode layer 18 toward the second solid electrolyte layer portion 34, while the content of polyurea gradually increases in the direction from the negative electrode layer 18 toward the second solid electrolyte layer portion 34. Namely, the contents of polyurethane and polyurea in the third mixture layer 230 and the fourth mixture layer 232 change linearly in the directions from the positive and negative electrode layers 16, 18 toward the solid electrolyte layer 20.

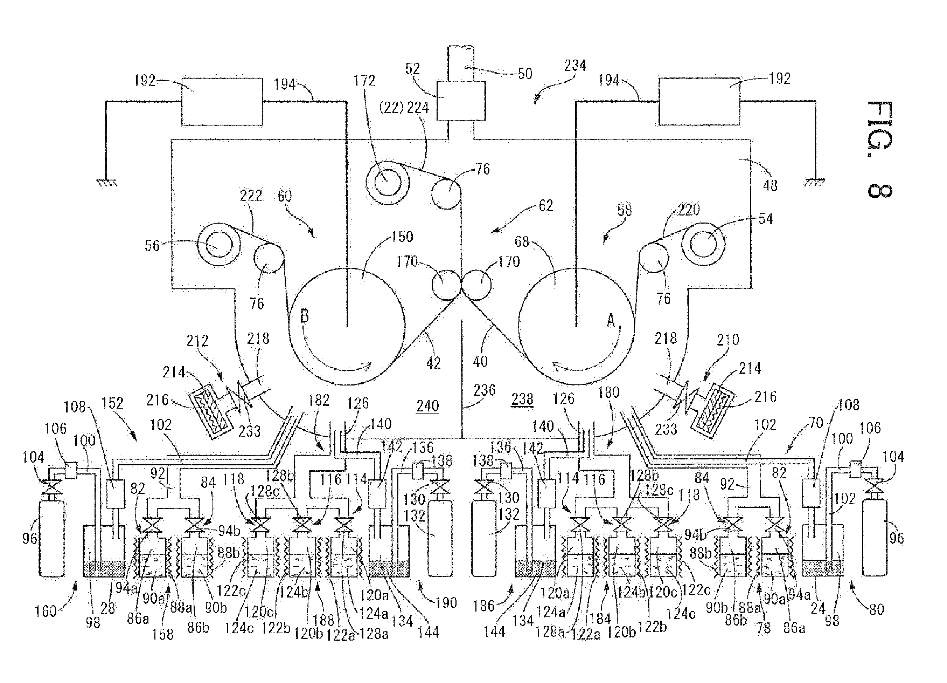

For example, a production apparatus 234 shown in Fig. 8 is suitably used to produce the thus constructed lithium-ion secondary battery 224.

In the production apparatus 234 according to the present fifth embodiment, the nozzles 218 of the positive and negative electrode collector layer forming units 210, 212 are provided with respective shut-off valves 233, as shown in Fig. 8. The nozzle 218 of the positive electrode collector layer forming unit 210 is open toward the outer circumferential surface of the first feeding roller 68, while the nozzle 218 of the negative electrode collector layer forming unit 212 is open toward the outer circumferential surface of the second feeding roller 150.

In the vacuum chamber 48, there is disposed a partition wall 236 between the first and second feeding rollers 68, 150. The partition wall 236 divides the vacuum chamber 48 into a first vacuum chamber 238 in which the first feeding roller 68 is disposed, and a second vacuum chamber 240 in which the second feeding roller 150 is disposed. In the first vacuum chamber 238, there are located the outlet end portion of the nozzle 218 of the positive electrode collector layer forming unit 210, the outlet end portion of the vapor supply pipe 92 of the positive electrode layer forming unit 70, and the outlet end portion of the vapor supply pipe 126 of the positive-electrode-side vapor-deposited polymer film forming unit 180, such that those outlet end portions are open toward the outer circumferential surface of the first feeding roller 68. In the second vacuum chamber 240, there are located the outlet end portion of the nozzle 218 of the negative electrode collector layer forming unit 212, the outlet end portion of the vapor supply pipe 92 of the negative electrode layer forming unit 152, and the outlet end portion of the vapor supply pipe 126 of the negative-electrode-side vapor-deposited polymer film forming unit 182, such that those outlet end portions are open toward the outer circumferential surface of the second feeding roller 150. In the other aspects, the present production apparatus 234 is identical in construction with the production apparatus 208 of the fourth embodiment shown in Fig. 6.

The desired lithium-ion secondary battery 224 is produced by the thus constructed production apparatus 234, in the following manner.

Initially, the roll of the positive-electrode-side protective film 220 and the roll of the negative-electrode-side protective film 222 are installed on the respective first and second supply rollers 54, 56, and the preparatory operation for production of the lithium-ion secondary battery 224 is carried out in the manner described above. Then, the vacuum pump 52 is operated to evacuate the first and second vacuum chambers 238, 240. At this time, the pressures within the first and second vacuum chambers 238, 240 are adjusted to the level as described above with respect to the production of the lithium-ion secondary battery 10 in the vacuum chamber 48.

On the other hand, the vapor-deposition materials 214 and materials 90a, 90b, 124a, 124b, 124c accommodated in the positive and negative electrode collector layer forming units 210, 212, positive and negative electrode layer forming units 70, 152, and positive-electrode-side and negative-electrode-side vapor-deposited polymer film forming units 180, 182 are evaporated by heating by the heaters 216, 88a, 88b, 122a, 122b, 122c provided in those forming units 210, 212, 70, 152, 180, 182.

In the present embodiment, the material reservoir 86a of each of the positive and negative electrode layer forming units 70, 152 accommodates, as the material 90a, aromatic diol such as 1,3-dihydroxyl benzene in a liquid state, for example, while the material reservoir 86b accommodates, as the material 90b, aromatic diisocyanate such as 1,4-phenylene diisocyanate in a liquid state, for example. The material reservoirs 120a, 120b, 120c of the positive-electrode-side and negative-electrode-side vapor-deposited polymer film forming units 180, 182 respectively accommodate ethylene glycol diamine such as diethylene glycol bis(3-aminopropyl) ether, aromatic diisocyanate such as m-xylylene diisocyanate, and olygo-ethylene oxide, in a liquid or solid state, for example.

After the pressure within the first vacuum chamber 238 has been adjusted to the predetermined level, only the shut-off valve 233 of the nozzle 218 of the positive electrode collector layer forming unit 210 is opened so that the vapor of aluminum accommodated as the vapor-deposition material 214 in the positive electrode collector layer forming unit 210 is introduced through the nozzle 218 into the first vacuum chamber 238, whereby the positive electrode collector layer 12 in the form of the vapor-posited aluminum film is formed on the positive-electrode-side protective film 220 being fed in contact with the outer circumferential surface of the first feeding roller 68.

After a predetermined length of time has passed after the moment of initiation of opening of the shut-off valve 233, the amount of opening of this shut-off valve 233 is gradually reduced to zero, so that the amount of supply of the vapor of aluminum into the first vacuum chamber 238 is gradually reduced to zero.

Upon or immediately before or after initiation of reduction of the amount of opening of the shut-off valve 233, the shut-off valves 94a, 94b of the vapor supply pipe 92 of the vapor-deposited polymer film forming device 78 of the positive electrode layer forming unit 70 are opened such that the amount of opening of the shut-off valves 94a, 94b is gradually increased to a predetermined constant value, so that the amount of supply of the materials 90a, 90b from the positive electrode layer forming unit 70 into the first vacuum chamber 238 is gradually increased to a predetermined constant value. At this time, it is desirable to adjust the rate of reduction of the amount of opening of the shut-ff valve 233 of the nozzle 218 of the positive electrode collector layer forming unit 210, and the rate of increase of the amount of opening of the shut-off valves 94a, 94b of the vapor supply pipe 92 of the vapor-deposited polymer film forming device 78, so that the pressure within the first vacuum chamber 238 is held as constant as possible.

Thus, as the amount of opening of the shut-off valve 233 of the positive electrode collector layer forming unit 210 is gradually reduced, the amount of further deposition of the vapor of aluminum on the positive electrode collector layer 12 of a predetermined thickness is gradually reduced, while the amount of production of polyurethane on the positive electrode collector layer 12 is gradually increased as the amount of opening of the shut-off valves 94a, 94b of the positive electrode layer forming unit 70 is gradually increased. That is, during a time period from the moment of initiation of reduction of the amount of opening of the shut-off valve 233 to the moment at which the shut-off valve 233 is fully closed and the amount of the vapor of aluminum within the first vacuum chamber 238 is reduced to zero, the vapor deposition of aluminum to form the positive electrode collector layer 12 and the polymerization reaction of the materials 90a, 90b supplied from the vapor-deposited polymer film forming device 78 take place concurrently to form the above-described first mixture layer 226 integrally on the positive electrode collector layer 12.

A time period from the moment of initiation of opening of the shut-off valve 233 to the moment of initiation of reduction of the amount of its opening is suitably selected depending upon the desired thickness of the positive electrode collector layer 12 to be formed. The shut-off valve 104 of the gas cylinder 96 of the positive electrode active substance introducing device 80 of the positive electrode layer forming unit 70 is opened at a point of time between the moment of initiation of opening of the shut-off valves 94a, 94b of the vapor supply pipe 92 and the moment at which the amount of their opening has been increased to a predetermined constant value, or opened at the latter moment.

After a predetermined length of time has passed after the moment at which the amount of opening of the shut-off valves 94a, 94b of the vapor supply pipe 92 has been increased to the predetermined constant value, the amount of opening of the shut-off valves 94a, 94b is gradually reduced to zero, so that the amount of supply of the materials 90a, 90b from the positive electrode layer forming unit 70 into the first vacuum chamber 238 is held constant at the predetermined value for a predetermined length of time, and is subsequently gradually reduced to zero. The shut-off valve 104 of the gas cylinder 96 of the positive electrode layer forming unit 70 is closed at a point of time at which the reduction of the amount of opening of the shut-off valves 94a, 94b is initiated, at a point of time at which the shut-off valves 94a, 94b are fully closed, or at a point of time between the moment of initiation of reduction of the amount of opening of the shut-off valves 94a, 94b and the moment at which the shut-off valves 94a, 94b are fully closed.

Upon or immediately before or after initiation of reduction of the amount of opening of the shut-off valves 94a, 94b, the shut-off valves 128a, 128b, 128c of the vapor supply pipe 126 of the vapor-deposited polymer film forming device 184 of the positive-electrode-side vapor-deposited polymer film forming unit 180 are opened such that the amount of opening of the shut-off valves 128a, 128b, 128c are gradually increased to a predetermined constant value, so that the amount of supply of the materials 124a, 124b, 124c from the positive-electrode-side vapor-deposited polymer film forming unit 180 into the first vacuum chamber 238 is gradually increased to a predetermined constant value.

At this time, too, it is desirable to adjust the rate of reduction of the amount of opening of the shut-off valves 94a, 94b, and the rate of increase of the amount of opening of the shut-off valves 128a, 128b, 128c, so that the pressure within the first vacuum chamber 238 is held as constant as possible. The shut-off valve 130 of the gas cylinder 132 of the lithium salt introducing device 186 of the positive-electrode-side vapor-deposited polymer film forming unit 180 is opened at a point of time between the moment of initiation of opening of the shut-off valves 128a, 128b, 128c of the vapor supply pipe 126 and the moment at which the amount of their opening has been increased to a predetermined constant value, or at the latter moment.

Thus, only polyurethane is produced on the first mixture layer 226 while only the shut-off valves 94a, 94b of the positive electrode layer forming unit 70 are held open by the predetermined amount, so that the positive electrode layer 16 is formed on the first mixture layer 226. A time period during which the shut-off valves 94a, 94b are held open by the predetermined amount is suitably selected depending upon the desired thickness of the positive electrode layer 16 to be formed.

The amount of further production of polyurethane on the positive electrode layer 16 of the predetermined thickness is gradually reduced after the moment of initiation of reduction of the amount of opening of the shut-off valves 94a, 94b of the positive electrode layer forming unit 70, while the amount of production of polyurea on the positive electrode layer 16 is gradually increased after the moment of initiation of opening of the shut-off valves 128a, 128b, 128c of the positive-electrode-side vapor-deposited polymer film forming unit 180. That is, during a time period from the moment of initiation of reduction of the amount of opening of the shut-off valves 94a, 94b to the moment at which the shut-off valves 94a, 94b are fully closed and the amount of the materials 90a, 90b within the first vacuum chamber 238 is reduced to zero, the polymerization reaction of these materials 90a, 90b and the polymerization reaction of the materials 124a, 124b, 124c supplied from the positive-electrode-side vapor-deposited polymer film forming unit 180 take place concurrently to form the above-described third mixture layer 230 integrally on the positive electrode layer 16.

After a predetermined length of time has passed after the moment at which the amount of opening of the shut-off valves 128a, 128b, 128c of the vapor-deposited polymer film forming unit 180 has been increased to the predetermined constant value, these shut-off valves 128a, 128b, 128b are fully closed. That is, the materials 124a, 124b, 124c are continuously supplied at a predetermined rate from the vapor-deposited polymer film forming unit 180 into the first vacuum chamber 238 for a predetermined length of time, and the amount of supply of these materials is reduced to zero after the predetermined length of time has passed.

Thus, the positive electrode collector layer 12, the first mixture layer 226, the positive electrode layer 16, the third mixture layer 230 and the positive-electrode-side vapor-deposited polymer film 174 (first solid electrolyte layer portion 32) are laminated on each other in this order of description, integrally on the positive-electrode-side protective film 220, whereby the first laminar member 40 is continuously produced.

While the first laminar member 40 is produced, the negative electrode collector layer 14, the second mixture layer 228, the negative electrode layer 18, the fourth mixture layer 232 and the negative-electrode-side vapor-deposited polymer film 176 (second solid electrolyte layer portion 34) are laminated on each other in this order of description, integrally on the negative-electrode-side protective film 222 being continuously fed from the second supply roller 56, in the second vacuum chamber 240, whereby the second laminar member 42 is continuously produced. This second laminar member 42 is produced in substantially the same manner as the first laminar member 40, by the negative electrode collector layer forming unit 212, the negative electrode layer forming unit 152 and the negative-electrode-side vapor-deposited polymer film forming unit 182.

Subsequently, the thus produced first and second laminar members 40, 42 are laminated on each other by the pair of laminating rollers 170, 170 of the battery cell producing unit 62, and are wound on the take-up roller 172, as a roll of the desired lithium-ion secondary battery 224.

It will be understood from the foregoing description of the fifth embodiment that this embodiment has substantially the same operational and physical advantages as the several embodiments described above.

The present embodiment is further configured to form the first through fourth mixture layers 226, 228, 230, 232 in the vacuum chamber 48 in a roll-to-roll transferring fashion, such that the first and second mixture layers 226, 228 are respectively formed between the positive electrode collector layer 12 and the positive electrode layer 16 and between the negative electrode collector layer 14 and the negative electrode layer 18, while the third and fourth mixture layers 230, 232 are respectively formed between the positive electrode layer 16 and the first solid electrolyte layer portion 32 and between the negative electrode layer 18 and the second solid electrolyte layer portion 34. Accordingly, the positive and negative electrode layers 16, 18 and the solid electrolyte layer 20 do not have any distinct boundary interface therebetween, and the positive electrode collector layer 12 and the positive electrode layer 16, and the negative electrode collector layer 14 and the negative electrode layer 18 do not have any distinct boundary interface therebetween, so that the lithium-ion secondary battery 224 having more advantageously increased electron conductivity and ion conductivity and a more effectively improved output density can be efficiently produced with a high degree of productivity

While the embodiments of the present invention have been described above in detail, for illustrative purpose only, it is to be understood that the invention is not limited to the details of the illustrated embodiments.

For example, the lithium-ion secondary battery 10, 177, 224 may be constituted by a plurality of battery cells 22 which are laminated on each other such that the positive electrode collector layer 12 of one of the two adjacent battery cells 22 is in contact with the negative electrode collector layer 14 of the other adjacent battery cell 22. This lithium-ion secondary battery 10, 177, 224 can be efficiently produced with a reduced size and compact construction, but can be used for higher-voltage applications.

Further, the powder supply pipes 102, 140 and the gas supply pipe 136 may be disposed in parallel with the vapor supply pipes 92, 126, as long as the pipes 102, 140, 136 permit the positive and negative electrode active substances 24, 28 and the lithium-ion conductivity rendering substance 144 to be blown onto the substrates (aluminum foil strip 64, copper foil strip 66, and positive-electrode-side and negative-electrode-side protective films 220, 222), together with the materials 90a, 90b, 124a, 124b, 124c. In this case, the outlet open ends of the powder supply pipes 102, 140 and the gas supply pipe 136 are preferably located upstream of the outlet open ends of the vapor supply pipes 92, 126 as seen in the direction of feeding of the aluminum and copper foil strips 64,66 and the protective films 220, 222 by the first and second feeding rollers 68, 150, so that the positive and negative electrode active substances 24, 28 and the lithium-ion conductivity rendering substance 144 can be stably mixed in the materials 90a, 90b, 124a, 124b, 124c before completion of polymerization of these materials 90a, 90b, 124a, 124b, 124c.

Further, the lithium-ion secondary battery 224 according to the fourth embodiment may be modified such that only one of the first through fourth mixture layers 226, 228, 230, 232 is formed.

In the illustrated embodiments, lithium ions and anions are unevenly distributed within the first and second solid electrolyte layer portions 32, 34 such that the content of lithium ions is higher in the thickness portions of the solid electrolyte layer portions 32, 34 which are adjacent to the respective positive and negative electrode layers 16, 18, while the content of anions is higher in the thickness portions of the solid electrolyte layer portions 32, 34 on the side of the laminate interface 44. This uneven distribution of lithium ions and anions may be realized by applying an electric or magnetic field generated by an electromagnet or a permanent magnet to the first and second laminar members 40, 42 produced by the production apparatus 178, 195, 208, 234, for example.

It is to be understood that the present invention may be embodied with various other changes, modifications and improvements, which may occur to those skilled in the art, without departing from the spirit and scope of the invention defined by the appended claims.

**NOMENCLATURE OF ELEMENTS**

| | | | |
|---|---|---|---|
| 10, 177, 224: | Lithium-ion secondary battery | | |
| 12: | Positive electrode collector layer | 14: | Negative electrode collector layer |
| 16: | Positive electrode layer | 18: | Negative electrode layer |
| 20: | Solid electrolyte layer | 22: | Battery cell |
| 24: | Positive electrode active substance | | |
| 26: | Positive-electrode vapor-deposited polymer film containing a positive electrode active substance | | |
| 28: | Negative electrode active substance | | |
| 30: | Negative-electrode vapor-deposited polymer film containing a negative electrode active substance | | |
| 32: | First solid electrolyte layer portion | | |
| 34: | Second solid electrolyte layer portion | | |
| 40: | First laminar member | 42: | Second laminar member |
| 46, 178, 195, 208, 234: | Production apparatus | | |
| 58: | First laminar member producing unit | 60: | Second laminar member producing unit |
| 62: | Battery cell producing unit | | |
| 144: | Lithium-ion conductivity rendering substance | | |
| 174: | Positive-electrode-side vapor-deposited polymer film containing a lithium salt | | |
| 176: | Negative-electrode-side vapor-deposited polymer film containing a lithium salt | | |

## Claims

1. A lithium-ion secondary battery (10;177;224) having a battery cell (22) including a positive electrode collector layer (12), a positive electrode layer (16), a solid electrolyte layer (20), a negative electrode layer (18) and a negative electrode collector layer (14), which are laminated on each other in this order of description, comprising:
said positive electrode layer (16) being constituted by a positive-electrode vapor-deposited polymer film (26) which is formed integrally on a surface of said positive electrode collector layer (12) and which contains a positive electrode active substance (24);
said negative electrode layer (18) being constituted by a negative-electrode vapor-deposited polymer film (30) which is formed integrally on a surface of said negative electrode collector layer (14) and which contains a negative electrode active substance (28); and
said solid electrolyte layer (20) being constituted by a laminar body consisting of an ion-conductive positive-electrode-side vapor-deposited polymer film (36,37;174) which is formed integrally on a surface of said positive electrode layer (16) and which contains a lithium salt, and an ion-conductive negative-electrode-side vapor-deposited polymer film (38,39;176) which is formed integrally on a surface of said negative electrode layer (18) and which contains a lithium salt, said positive-electrode-side and negative-electrode-side ion-conductive vapor-deposited polymer films being laminated on each other.

2. The lithium-ion secondary battery (177;224) according to claim 1, wherein lithium ions and anions derived from the lithium salt contained in said positive-electrode-side and negative-electrode-side vapor-deposited polymer films of said solid electrolyte layer are unevenly distributed in said solid electrolyte layer such that a content of the lithium ions is higher in thickness portions of the positive-electrode-side and negative-electrode-side vapor-deposited polymer films which are respectively adjacent to said positive and negative electrode layers, than in the other thickness portions respectively remote from the positive and negative electrode layers, and such that a content of the anions is higher in said other thickness portions respectively remote from the positive and negative electrode layers, than in the thickness portions respectively adjacent to the positive and negative electrode layers.

3. The lithium-ion secondary battery (10) according to claim 1 or 2, wherein thickness portions of the positive-electrode-side and negative-electrode-side vapor-deposited polymer films of said solid electrolyte layer which are respectively adjacent to said positive and negative electrode layers are formed of a polymer having a functional group which includes an element of high electronegativity which attracts lithium ions derived from the lithium salt contained in the positive-electrode-side and negative-electrode-side vapor-deposited polymer films, toward said thickness portions of the positive-electrode-side and negative-electrode-side vapor-deposited polymer films respectively adjacent to the positive and negative electrode layers, for unevenly distributing the lithium ions in the solid electrolyte layer such that a content of the lithium ions is higher in said thickness portions of the positive-electrode-side and negative-electrode-side vapor-deposited polymer films respectively adjacent to the positive and negative electrode layers, than in the other thickness portions respectively remote from the positive and negative electrode layers.

4. The lithium-ion secondary battery (10;177;224) according to claim 2 or 3, wherein said positive-electrode and negative-electrode vapor-deposited polymer films respectively containing said positive and negative electrode active substances have ion conductivity.

5. The lithium-ion secondary battery (10;177;224) according to any one of claims 1-3, wherein said positive-electrode and negative-electrode vapor-deposited polymer films respectively containing said positive and negative electrode active substances have electron conductivity.

6. The lithium-ion secondary battery (224) according to any one of claims 1-5, wherein said battery cell (22) further includes a positive-electrode-side mixture layer (230) which is interposed between said positive electrode layer (16) and said solid electrolyte layer (20) and which is formed of a mixture of a first polymer used to form said positive-electrode vapor-deposited polymer film (26) containing said positive electrode active substance (24), and a second polymer used to form said positive-electrode-side vapor-deposited polymer film (174) containing said lithium salt, such that a content of said first polymer in said positive-electrode-side mixture layer gradually decreases in a direction from said positive electrode layer toward said solid electrolyte layer, while a content of said second polymer in the positive-electrode-side mixture layer gradually increases in the direction from the positive electrode layer toward the solid electrolyte layer.

7. The lithium-ion secondary battery (224) according to any one of claims 1-6, wherein said battery cell (22) further includes a negative-electrode-side mixture layer (232) which is interposed between said negative electrode layer (18) and said solid electrolyte layer (20) and which is formed of a mixture of a third polymer used to form said negative-electrode vapor-deposited polymer film (30) containing said negative electrode active substance (28), and a fourth polymer used to form said negative-electrode-side vapor-deposited polymer film (176) containing said lithium salt, such that a content of said third polymer in said negative-electrode-side mixture layer gradually decreases in a direction from said negative electrode layer toward said solid electrolyte layer, while a content of said fourth polymer in the negative-electrode-side mixture layer gradually increases in the direction from the negative electrode layer toward the solid electrolyte layer.

8. A method of producing a lithium-ion secondary battery (10;177;224) having a battery cell (22) including a positive electrode collector layer (12), a positive electrode layer (16), a solid electrolyte layer (20), a negative electrode layer (18) and a negative electrode collector layer (14), which are laminated on each other in this order of description, comprising:
a step of preparing said positive electrode collector layer (12);
a step of preparing said negative electrode collector layer (14);
a step of forming, as said positive electrode layer (16), a positive-electrode vapor-deposited polymer film (26) containing a positive electrode active substance (24), integrally on a surface of said positive electrode collector layer (12);
a step of integrally forming, on a surface of said positive electrode layer (16) formed integrally on said positive electrode collector layer (12), a positive-electrode-side vapor-deposited polymer film (36,37;174) containing an ion-conductivity rendering substance including a lithium salt, as a first solid electrolyte layer portion (32) which is a thickness portion of said solid electrolyte layer (20) adjacent to said positive electrode layer (16), for thereby producing a first laminar member (40) consisting of said positive electrode collector layer (12), said positive electrode layer (16) and said first solid electrolyte layer portion (32) which are laminated on each other;
a step of forming, as said negative electrode layer (18), a negative-electrode vapor-deposited polymer film (30) containing a negative electrode active substance (28), integrally on a surface of said negative electrode collector layer (14);
a step of integrally forming, on a surface of said negative electrode layer (18) formed integrally on said negative electrode collector layer (14), a negative-electrode-side vapor-deposited polymer film (38,39;176) containing an ion-conductivity rendering substance including a lithium salt, as a second solid electrolyte layer portion (34) which is a remaining thickness portion of said solid electrolyte layer (20) adjacent to said negative electrode layer (18), for thereby producing a second laminar member (42) consisting of said negative electrode collector layer (14), said negative electrode layer (18) and said second solid electrolyte layer portion (34) which are laminated on each other; and
a step of laminating said first and second laminar members on each other, with said first and second solid electrolyte layer portions being held in contact with each other.

9. The method according to claim 8, wherein said steps of forming said positive-electrode-side and negative-electrode-side vapor-deposited polymer films of said first and second solid electrolyte layer portions comprise unevenly distributing lithium ions and anions derived from the lithium salt contained in said positive-electrode-side and negative-electrode-side vapor-deposited polymer films, in said solid electrolyte layer (20), before lamination of said first and second laminar members on each other, such that a content of the lithium ions is higher in a thickness portion of said first solid electrolyte layer portion (32) adjacent to said positive electrode layer (16), than in the other thickness portion of the first solid electrolyte layer portion remote from the positive electrode layer, while a content of the anions is higher in said other thickness portion of the first solid electrolyte layer portion, and such that a content of the lithium ions is higher in a thickness portion of said second solid electrolyte layer portion (34) adjacent to said negative electrode layer (18), than in the other thickness portion of the second solid electrolyte layer portion remote from the negative electrode layer, while a content of the anions is higher in said other thickness portion of the second solid electrolyte layer portion.

10. The method according to claim 8, wherein said steps of forming said positive-electrode-side and negative-electrode-side vapor-deposited polymer films of said first and second solid electrolyte layer portions comprise forming thickness portions of the positive-electrode-side and negative-electrode-side vapor-deposited polymer films which are respectively adjacent to said positive and negative electrode layers, of a polymer having a functional group which includes an element of high electronegativity which attracts lithium ions derived from the lithium salt contained in the positive-electrode-side and negative-electrode-side vapor-deposited polymer films, toward said thickness portions of the positive-electrode-side and negative-electrode-side vapor-deposited polymer films respectively adjacent to the positive and negative electrode layers, for unevenly distributing the lithium ions in the solid electrolyte layer (20) such that a content of the lithium ions is higher in said thickness portions of the positive-electrode-side and negative-electrode-side vapor-deposited polymer films respectively adjacent to the positive and negative electrode layers, than in the other thickness portions respectively remote from the positive and negative electrode layers.

11. The method according to any one of claims 8-10, wherein said step of forming said positive-electrode vapor-deposited polymer film (26) containing said positive electrode active substance (24) comprises introducing vapors of a plurality of materials for forming said positive electrode layer (16), into a reaction chamber in an evacuated state in which said positive electrode collector layer (12) is accommodated, so that the introduced vapors are polymerized to form a vapor-deposited polymer film on the surface of said positive electrode collector layer, and at the same time introducing said positive electrode active substance (24) into said reaction chamber, so that the positive electrode active substance is introduced into the vapor-deposited polymer film, whereby said positive-electrode vapor-deposited polymer film (26) containing the positive electrode active substance (24) is formed as the positive electrode layer (16) integrally on the positive electrode collector layer (12),
said step of forming said positive-electrode-side vapor-deposited polymer film (174) of said first solid electrolyte layer portion (32) comprising introducing vapors of a plurality of materials for forming said first solid electrolyte layer portion, into said reaction chamber, after a predetermined length of time has passed after initiation of the step of forming said positive-electrode vapor-deposited polymer film (26), so that the introduced vapors are polymerized to form a vapor-deposited polymer film on the surface of said positive electrode layer (16), and at the same time introducing said ion-conductivity rendering substance into said reaction chamber, so that the ion-conductivity rendering substance is introduced into the vapor-deposited polymer film, whereby said positive-electrode-side vapor-deposited polymer film (174) containing the ion-conductivity rendering substance is formed as the first solid electrolyte layer portion (32) integrally on the positive electrode layer (16),
wherein amounts of introduction of the vapors of the plurality of materials for forming said positive electrode layer (16) into said reaction chamber are gradually reduced to zero after initiation of introduction of the vapors of the plurality of materials for forming said first solid electrolyte layer portion (32) into the reaction chamber, so that polymerization of the plurality of materials for forming the positive electrode layer and polymerization of the plurality of materials for forming the first solid electrolyte layer portion take place concurrently with each other, to form a positive-electrode-side mixture layer (230) on said surface of the positive electrode layer (16), the mixture layer being formed of a mixture consisting of a product obtained by the polymerization of the plurality of materials for forming the positive electrode layer (16) and a product obtained by the polymerization of the plurality of materials for forming the first solid electrolyte layer portion (32).

12. The method according to any one of claims 8-11, wherein said step of forming said negative-electrode vapor-deposited polymer film (30) containing said negative electrode active substance (28) comprises introducing vapors of a plurality of materials for forming said negative electrode layer (18), into a reaction chamber in an evacuated state in which said negative electrode collector layer (14) is accommodated, so that the introduced vapors are polymerized to form a vapor-deposited polymer film on the surface of said negative electrode collector layer, and at the same time introducing said negative electrode active substance (28) into said reaction chamber, so that the negative electrode active substance is introduced into the vapor-deposited polymer film, whereby said negative-electrode vapor-deposited polymer film (30) containing the negative electrode active substance (28) is formed as the negative electrode layer (18) integrally on the negative electrode collector layer (14),
said step of forming said negative-electrode-side vapor-deposited polymer film (176) of said second solid electrolyte layer portion (34) comprising introducing vapors of a plurality of materials for forming said second solid electrolyte layer portion, into said reaction chamber, after a predetermined length of time has passed after initiation of the step of forming said negative-electrode vapor-deposited polymer film (30), so that the introduced vapors are polymerized to form a vapor-deposited polymer film on the surface of said negative electrode layer (18), and at the same time introducing said ion-conductivity rendering substance into said reaction chamber, so that the ion-conductivity rendering substance is introduced into the vapor-deposited polymer film, whereby said negative-electrode-side vapor-deposited polymer film (176) containing the ion-conductivity rendering substance is formed as the second solid electrolyte layer portion (34) integrally on the negative electrode layer (18),
wherein amounts of introduction of the vapors of the plurality of materials for forming said negative electrode layer (18) into said reaction chamber are gradually reduced to zero after initiation of introduction of the vapors of the plurality of materials for forming said second solid electrolyte layer portion (34) into the reaction chamber, so that polymerization of the plurality of materials for forming the negative electrode layer (18) and polymerization of the plurality of materials for forming the second solid electrolyte layer portion (34) take place concurrently with each other, to form a negative-electrode-side mixture layer (232) on said surface of the negative electrode layer (18), the mixture layer being formed of a mixture consisting of a product obtained by the polymerization of the plurality of materials for forming the negative electrode layer (18) and a product obtained by the polymerization of the plurality of materials for forming the second solid electrolyte layer portion (34).

13. An apparatus (46;178;195;208;234) for producing a lithium-ion secondary battery (10;177;224) having a battery cell (22) including a positive electrode collector layer (12), a positive electrode layer (16), a solid electrolyte layer (20), a negative electrode layer (18) and a negative electrode collector layer (14), which are laminated on each other in this order of description, comprising:
a first laminar member producing unit (58) configured to produce a first laminar member (40) consisting of said positive electrode collector layer (12), said positive electrode layer (16) and a first solid electrolyte layer portion (32), which are integrally laminated on each other, said first solid electrolyte layer portion (32) being a thickness portion of said solid electrolyte layer (20) adjacent to said positive electrode layer (16);
a second laminar member producing unit (60) configured to produce a second laminar member (42) consisting of said negative electrode collector layer (14), said negative electrode layer (18) and a second solid electrolyte layer portion (34), which are integrally laminated on each other, said second solid electrolyte layer portion (34) being a thickness portion of said solid electrolyte layer (20) adjacent to said negative electrode layer (18); and
a battery cell producing unit (62) configured to laminate said first and second laminar members on each other, with said first and second solid electrolyte layer portions being held in contact with each other,
wherein said first laminar member producing unit (58) including positive electrode layer forming means (70) for forming, as said positive electrode layer (16), a positive-electrode vapor-deposited polymer film (26) containing a positive electrode active substance (24), integrally on a surface of said positive electrode collector layer (12), and first solid electrolyte layer portion forming means (72,74;180) for integrally forming, on a surface of said positive electrode layer (16) formed by said positive electrode layer forming means (70), a positive-electrode-side vapor-deposited polymer film (36,37;174) containing an ion-conductivity rendering substance including a lithium salt, as said first solid electrolyte layer portion (32),
and wherein said second laminar member producing unit (60) including negative electrode layer forming means (152) for forming, as said negative electrode layer (18), a negative-electrode vapor-deposited polymer film (30) containing a negative electrode active substance (28), integrally on a surface of said negative electrode collector layer (14), and second solid electrolyte layer portion forming means (154,156;182) for integrally forming, on a surface of said negative electrode layer (18) formed by said negative electrode layer forming means (152), a negative-electrode-side vapor-deposited polymer film (38,39;176) containing an ion-conductivity rendering substance including a lithium salt, as said second solid electrolyte layer portion (34).

14. The apparatus (46;178;195;208;234) according to claim 13, wherein said positive electrode layer forming means (70) includes first vapor-deposited polymer film forming means (78) for forming a vapor-deposited polymer film by a vapor-deposition polymerization process integrally on the surface of said positive electrode collector layer (12), and positive electrode active substance introducing means (80) for introducing said positive electrode active substance (24) into said vapor-deposited polymer film being formed by said first vapor-deposited polymer film forming means (78), said first vapor-deposited polymer film forming means (78) and said positive electrode active substance introducing means (80) cooperating to form said positive-electrode vapor-deposited polymer film (26) containing said positive electrode active substance (24), integrally on the surface of said positive electrode collector layer (12),
said first solid electrolyte layer portion forming means (72,74;180) including second vapor-deposited polymer film forming means (110,146;184;196) for forming a vapor-deposited polymer film by a vapor-deposition polymerization process integrally on the surface of said positive electrode layer (16) formed integrally on said positive electrode collector layer (12), and first lithium salt introducing means (112,148;186;198) for introducing said ion-conductivity rendering substance including the lithium salt, into the vapor-deposited polymer film being formed by said second vapor-deposited polymer film forming means (110,146;184;196), said second vapor-deposited polymer film forming means (110,146;184;196) and said first lithium salt introducing means (112,148;186;198) cooperating to form said positive-electrode-side vapor-deposited polymer film (36,37;174) containing the lithium salt, integrally on the surface of said positive electrode layer (16),
said negative electrode layer forming means (152) includes third vapor-deposited polymer film forming means (158) for forming a vapor-deposited polymer film by a vapor-deposition polymerization process integrally on the surface of said negative electrode collector layer (14), and negative electrode active substance introducing means (160) for introducing said negative electrode active substance (28) into said vapor-deposited polymer film being formed by said third vapor-deposited polymer film forming means (158), said third vapor-deposited polymer film forming means (158) and said negative electrode active substance introducing means (160) cooperating to form said negative-electrode vapor-deposited polymer film (30) containing said negative electrode active substance (28), integrally on the surface of said negative electrode collector layer (14), and
said second solid electrolyte layer portion forming means (154,156;182) including fourth vapor-deposited polymer film forming means (162,166;188;204) for forming a vapor-deposited polymer film by a vapor-deposition polymerization process integrally on the surface of said negative electrode layer (18) formed integrally on said negative electrode collector layer (14), and second lithium salt introducing means (164,168;190;206) for introducing said ion-conductivity rendering substance including the lithium salt, into the vapor-deposited polymer film being formed by said fourth vapor-deposited polymer film forming means (162,166;188;204), said fourth vapor-deposited polymer film forming means (162,166;188;204) and said second lithium salt introducing means (164,168;190;206) cooperating to form said negative-electrode-side vapor-deposited polymer film (38,39;176) containing the lithium salt, integrally on the surface of said negative electrode layer (18).

15. The apparatus (178;195;208;234) according to claim 13 or 14, further comprising first unevenly distributing means (192,194) for applying an electric or magnetic field to said first laminar member (40) produced by said first laminar member producing unit (58), to attract lithium ions derived from said lithium salt contained in said positive-electrode-side vapor-deposited polymer film (174), toward a thickness portion of the positive-electrode-side vapor-deposited polymer film which is adjacent to said positive electrode layer (16), so that the lithium ions are unevenly distributed in the positive-electrode-side vapor-deposited polymer film such that a content of the lithium ions is higher in said thickness portion adjacent to the positive electrode layer, than in the other thickness portion remote from the positive electrode layer, while a content of anions derived from said lithium salt is higher in said other thickness portion remote from the positive electrode layer, than in said thickness portion adjacent to the positive electrode layer, and second unevenly distributing means (192,194) for applying an electric or magnetic field to said second laminar member (42) produced by said second laminar member producing unit (60), to attract lithium ions derived from said lithium salt contained in said negative-electrode-side vapor-deposited polymer film (176), toward a thickness portion of the negative-electrode-side vapor-deposited polymer film which is adjacent to said negative electrode layer (18), so that the lithium ions are unevenly distributed in the negative-electrode-side vapor-deposited polymer film such that a content of the lithium ions is higher in said thickness portion adjacent to the negative electrode layer, than in the other thickness portion remote from the negative electrode layer, while a content of anions derived from said lithium salt is higher in said other thickness portion remote from the negative electrode layer, than in said thickness portion adjacent to the negative electrode layer.
